# EUROPEAN PATENT SPECIFICATION

(11) **EP 2 546 538 B1**
(45) Date of publication and mention of the grant of the patent: **08.04.2015**
(21) Application number: 12172616.0
(22) Date of filing: 19.06.2012
(51) Int. Cl.: F16D 25/10, F16D 25/0638, F16H 61/684

(54) **Transmission apparatus and saddle type vehicle including the same**
Getriebevorrichtung und damit ausgestattetes Zweirad
Appareil de transmission et véhicule de type à enfourcher comprenant celui-ci

(30) Priority: 12.07.2011 JP 2011153566
(43) Date of publication of application: 16.01.2013
(73) Proprietor: Yamaha Hatsudoki Kabushiki Kaisha, SHIZUOKA-KEN 438-8501 (JP)
(72) Inventor: Murayama, Takuji, Shizuoka-ken, 438-8501 (JP); Hata, Shinichiro, Shizuoka-ken, 438-8501 (JP)
(74) Representative: Stöckeler, Ferdinand

(56) References cited:
- JP-A- 63 312 577
- JP-U- 54 122 428
- US-A- 4 731 998
- US-A- 5 301 922

## Description

### BACKGROUND OF THE INVENTION

### Field of the Invention

The present invention relates to a transmission apparatus and a saddle type vehicle including the same, and more specifically to a transmission apparatus having a plurality of hydraulic clutch portions, and a saddle type vehicle including the same.

### Description of the Related Art

Transmission apparatuses having a plurality of hydraulic clutch portions are proposed. For example and according to the preamble of claim 1, JP-A 2009-68700 discloses a stepwise automatic transmission apparatus which has a first through a third hydraulic transmission clutches. In this stepwise automatic transmission apparatus, oil is supplied to the first through the third hydraulic transmission clutches selectively, whereby the first through the third hydraulic transmission clutches are selectively brought to an engaged state. This enables the stepwise automatic transmission apparatus to change its speed change ratio.

Such a transmission apparatus having a plurality of hydraulic clutch portions described above is generally provided with a plurality of oil paths arranged to supply oil to the hydraulic clutch portions and a valve arranged to open/close the oil paths.

For example, as shown in Fig. 14, the stepwise automatic transmission apparatus disclosed in JP-A 2009-68700 includes an oil path 1 connected to the first hydraulic transmission clutch (not illustrated), an oil path 2 connected to the second hydraulic transmission clutch (not illustrated), an oil path 3 connected to the third hydraulic transmission clutch (not illustrated), and an oil path 4 connected to an oil reservoir (not illustrated). Also, a substantially columnar valve 5 is provided between the oil paths 1, 2, 3 and the oil paths 4. The valve 5 has internal paths 5a, 5b, 5c.

In the stepwise automatic transmission apparatus according to JP-A 2009-68700, an ECU (not illustrated) controls rotation of the valve 5. Thus, the oil path 4 is selectively connected with one of the oil paths 1, 2, 3 via the internal path 5a, 5b or 5c. As a result, oil in the oil path 4 is supplied selectively to the oil path 1, 2 or 3 to supply the oil selectively to one of the first through the third hydraulic transmission clutches.

Also, a rotary valve disclosed in JP-A 2001-90821 for example has a rotor which is provided rotatably inside a valve case. The rotor has its core formed with a pressurized-oil path whereas the rotor has its outer circumferential surface formed with a plurality of oil grooves for communication with the pressurized-oil path. Oil flows from outside the rotary valve through one of the oil grooves (hereinafter called oil inflow groove) of the rotor's outer circumferential surface into the pressurized-oil path. Then, the oil is supplied, via others of a plurality of oil grooves in the rotor's outer circumferential surface (hereinafter called oil outflow groove), to hydraulic clutches selectively.

As understood from Fig. 14, the valve 5 according to JP-A 2009-68700 has its internal paths 5a, 5b, 5c provided side by side axially of the valve 5, so it is difficult to shorten the axial length of the valve 5. For this reason, it is difficult to make a small transmission apparatus if the valve configuration disclosed in JP-A 2009-68700 is utilized for the transmission apparatus.

Also, in the rotary valve according to JP-A 2001-90821, the oil inflow groove to introduce oil into the rotary valve and the oil outflow grooves to send the oil from inside the rotary valve are formed side by side axially of the rotor in the rotor's outer circumferential surface. For this reason, it is difficult to shorten the axial length of the rotor. Therefore, it is difficult, also, to make a small transmission apparatus if the valve configuration disclosed in JP-A 2001-90821 is utilized for the transmission apparatus.

### SUMMARY OF THE INVENTION

Therefore, a primary object of the present invention is to provide a transmission apparatus which is small and capable of selectively supplying oil to a plurality of hydraulic clutch portions, as well as to provide a saddle type vehicle including the transmission apparatus.

This object is achieved by a transmission apparatus according to claim 1, and by a saddle type vehicle according to claim 4.

According to an aspect of the present invention, there is provided a transmission apparatus which has at least a first hydraulic clutch portion and a second hydraulic clutch portion. The transmission apparatus includes a first oil path arranged to introduce oil to the first hydraulic clutch portion; a second oil path arranged to introduce oil to the second hydraulic clutch portion; a third oil path for introducing oil from an oil source; and a valve member provided pivotably between the first oil path, the second oil path and the third oil path, settably to a first pivoting position and a second pivoting position. The valve member includes a fourth oil path extending through the valve member in parallel to the valve member's pivot axis and opening in said parallel direction to communicate with the third oil path; and a fifth and a sixth oil paths each extending from the fourth oil path in a direction vertical to the pivot axis and opening in said vertical direction. The fifth oil path and the sixth oil path are on a first hypothetical plane which is vertical to the pivot axis. With the above arrangement, the first oil path and the fifth oil path communicate with each other when the valve member is at the first pivoting position, whereas the second oil path and the sixth oil path communicate with each other when the valve member is at the second pivoting position.

In the transmission apparatus, the valve member is set to the first pivoting position, whereby the first oil path and the fifth oil path communicate with each other. Therefore, oil which is introduced from the oil source to the third oil path is then introduced through the fourth oil path and the fifth oil path, to the first oil path. Thus, it is possible to introduce the oil from the first oil path to the first hydraulic clutch portion. Also, the valve member is set to the second pivoting position, whereby the second oil path and the sixth oil path communicate with each other. Therefore, oil which is introduced from the oil source to the third oil path is then introduced through the fourth oil path and the sixth oil path, to the second oil path. Thus, it is possible to introduce the oil from the second oil path to the second hydraulic clutch portion. As described, according to the transmission apparatus, it is possible to supply oil selectively to the first hydraulic clutch portion or the second hydraulic clutch portion by setting the valve member selectively to the first pivoting position or the second pivoting position. Hence, it is possible to selectively engage or disengage the first hydraulic clutch portion and the second hydraulic clutch portion.

In the present transmission apparatus, the fifth oil path and the sixth oil path are on the first hypothetical plane which is vertical to a pivot axis of the valve member. In this case, it is possible to shorten the length of the valve member (a dimension parallel to the pivot axis) in comparison to cases where the fifth oil path and the sixth oil path are formed side by side to each other in a parallel direction to the pivot axis of the valve member. Also, in the present transmission apparatus, the fourth oil path extends in a direction parallel to the valve member's pivot axis and opens in this parallel direction, whereas the fifth oil path and the sixth oil path extend in a direction vertical to the pivot axis and open in this vertical direction. In this case, the opening portion (open end of the fourth oil path) which is arranged to introduce oil into the valve member in order to supply the oil to the first hydraulic clutch portion and the second hydraulic clutch portion is not disposed side by side in the same direction as the two opening portions (the open end of the fifth oil path and the open end of the sixth oil path) which are arranged to send oil from inside the valve member to the first hydraulic clutch portion and the second hydraulic clutch portion. More specifically, the above-mentioned three opening portions are not laid side by side in the direction which is in parallel to valve member's pivot axis, nor these three opening portions are laid side by side in the direction vertical to the valve member's pivot axis. Therefore, it is possible to reduce the length of the valve member in the direction parallel to the pivot axis, and to reduce the size of the valve member in the direction vertical to the pivot axis. Specifically, it is possible to reduce an axial length of the valve member and a thickness of the valve member. As a result, it is possible to make the transmission apparatus in a compact size.

Preferably, the fourth oil path is on the pivot axis of the valve member and is open on the pivot axis. In this case, it is easy to form the fourth path and to introduce oil smoothly from the third path to the fourth path.

More preferably, the transmission apparatus further includes a third hydraulic clutch portion; and a seventh oil path arranged to introduce oil to the third hydraulic clutch portion. The valve member is pivotable between the first oil path, the second oil path, the third oil path and the seventh oil path; is settable to a third pivoting position; and further includes an eighth oil path extending from the fourth oil path in a direction vertical to the pivot axis and opening in said vertical direction. The eighth oil path is on a second hypothetical plane which is vertical to the pivot axis; and the second plane is at a distance from the first plane in a direction parallel to the pivot axis. With this arrangement, the seventh oil path and the eighth oil path communicate with each other when the valve member is at the third pivoting position.

In the present transmission apparatus, the valve member is set to the third pivoting position, whereby the seventh oil path and the eighth oil path communicate with each other. Therefore, oil which is introduced from the oil source to the third oil path is then introduced through the fourth oil path and the eighth oil path, to the seventh oil path. Thus, it is possible to introduce the oil from the seventh oil path to the third hydraulic clutch portion. Therefore, according to the present transmission apparatus, it is possible to supply oil selectively to the first hydraulic clutch portion, the second hydraulic clutch portion or the third hydraulic clutch portion by setting the valve member selectively to the first pivoting position, the second pivoting position or the third pivoting position. Hence, it is possible to selectively engage or disengage the first hydraulic clutch portion, the second hydraulic clutch portion and the third hydraulic clutch portion. Also, in the present transmission apparatus, the eighth oil path is formed on the second plane which is at a distance from the first plane in a direction parallel to the pivot axis. In this case, the arrangement makes it possible to avoid a case where the fifth oil path, the sixth oil path and the eighth oil path are laid too closely to each other. Thus, it becomes possible to simplify the construction of the valve member.

A transmission apparatus which has a plurality of hydraulic clutch portions generally includes a valve arranged to selectively supply oil to the plurality of hydraulic clutch portions. In this case, space must be provided to dispose the valve member, which makes it difficult to make the transmission apparatus small. For this reason, it is difficult to make a compact saddle type vehicle which includes a transmission apparatus having a plurality of hydraulic clutch portions. However, as has been described, the transmission apparatus according to the present invention can supply oil selectively to a plurality of hydraulic clutch portions, and can be made compactly. Therefore, the transmission apparatus according to the present invention is applicable suitably to saddle type vehicles.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a scooter according to an embodiment of the present invention.
Fig. 2 is an illustrative sectional view showing an internal structure of an engine unit.
Fig. 3 is a schematic drawing showing constituent elements of the engine unit.
Fig. 4 is an illustrative side view of the engine unit.
Fig. 5 is an illustrative sectional view showing a structure near a second clutch unit.
Fig. 6 includes drawings for describing oil supply paths to clutch portions; Fig. 6(a) is a sectional view taken in lines A-A in Fig. 5; and Fig. 6(b) is a sectional view taken in lines B-B in Fig. 5.
Fig. 7 includes drawings of a valve member; Fig. 7(a) is a front view of the valve member (when the valve member is viewed from the left in Fig. 5); Fig. 7(b) is a side view of the valve member; Fig. 7(c) is a rear view of the valve member (when the valve member is viewed from the right in Fig. 5); and Fig. 7(d) is a sectional view taken in lines D-D in Fig. 7(a).
Fig. 8 is a development view showing a first portion of the valve member.
Fig. 9 shows a relationship between opening ends of oil paths formed in the casing and the valve member.
Fig. 10 shows another example of the valve member; Fig. 10 (a) is a sectional view taken in lines a-a in Fig. 10(b); and Fig. 10(b) is a sectional view taken in lines b-b in Fig. 10(a).
Fig. 11 shows still another example of the valve member.
Fig. 12 shows oil pressure change inside an oil chamber of a clutch portion.
Fig. 13 shows still another example of the valve member.

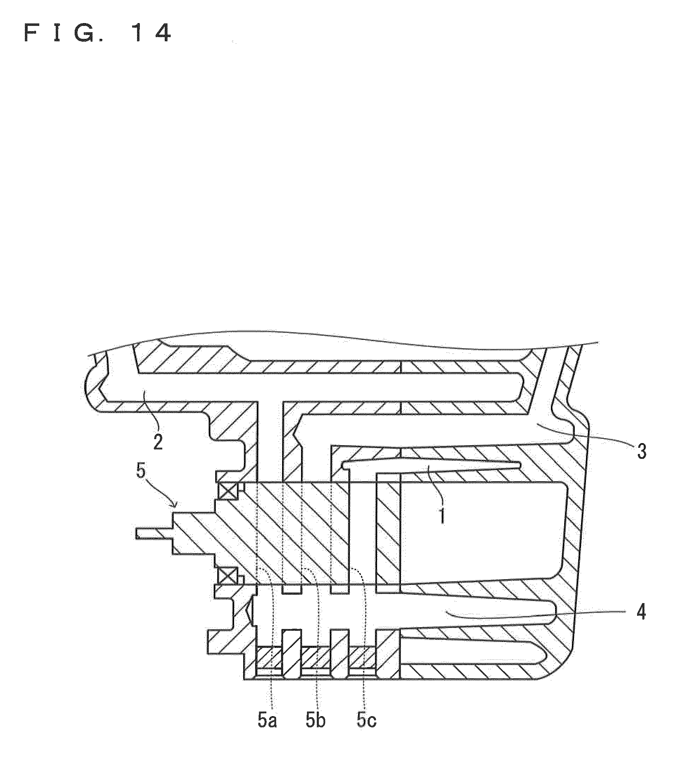

Fig. 14 is an illustrative sectional view showing a conventional stepwise automatic transmission apparatus.

### DETAILED DESCRIPTION OF THE PREFERRED EMBODIMENTS

Hereinafter, embodiments of the present invention will be described with reference to the drawings. The description will cover a case where a transmission apparatus 44 according to the embodiments of the present invention is installed in a scooter 10 as an example of saddle type vehicles. It is noted that the terms front and rear, right and left, up and down as used in the embodiments of the present invention are determined from the rider's position on a seat 40 of scooter 10, with the rider facing toward a handlebar 16.

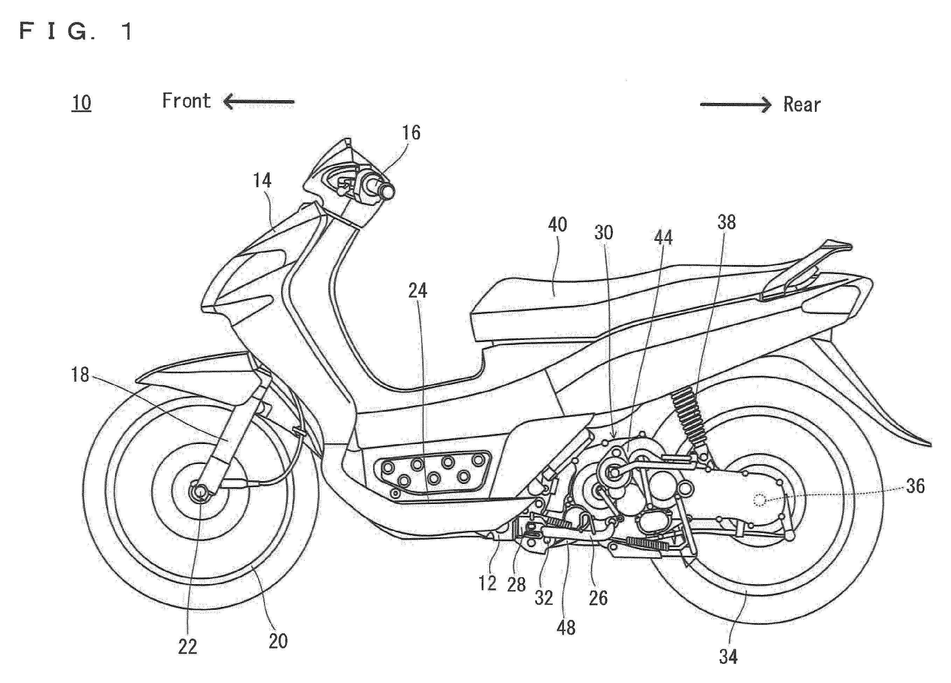

Fig. 1 is a side view of the scooter 10. Referring to Fig. 1, the scooter 10 includes a scooter frame 12 and a scooter cover 14 which covers the scooter frame 12. Although details of the scooter frame 12 are hidden behind the scooter cover 14 and not shown in Fig. 1, the scooter frame 12 has a front portion which extends obliquely in a forward and upward direction whereas a rear portion of the scooter frame 12 extends obliquely in a rearward and upward direction. The scooter frame 12 includes an unillustrated head pipe at a front end portion thereof. An unillustrated steering shaft is inserted rotatably into the head pipe. The steering shaft has an upper end portion provided with a handlebar 16. The steering shaft has a lower end portion, to which a front fork 18 is attached. The front fork 18 has a lower end portion which rotatably supports a front wheel 20 via a wheel shaft 22.

The scooter cover 14 has a lower end portion provided with a footstep 24 extending in the left and right directions for the rider to rest his/her feet. A side stand 26 is attached to the scooter frame 12, at a position behind the footstep 24 via a mounting portion 28. In the lower end portion of the scooter frame 12, an engine unit 30 is supported pivotably via a pivot shaft 32 at a position behind the mounting portion 28 and extends rearward. Specifically, the engine unit 30 has an engine bracket 48 to be described later, which is attached to the scooter frame 12 via the pivot shaft 32. As will be described later, the transmission apparatus 44 is included in the engine unit 30.

The engine unit 30 has a rear end portion rotatably supporting a rear wheel 34 via an output shaft 36. A cushion unit 38 is provided, connecting a rear portion (not shown) of the scooter frame 12 with the engine unit 30. A seat 40 is provided at a rear portion (not shown) of the scooter frame 12, above the cushion unit 38 for the rider to sit on.

Hereinafter, the engine unit 30 will be described in detail.

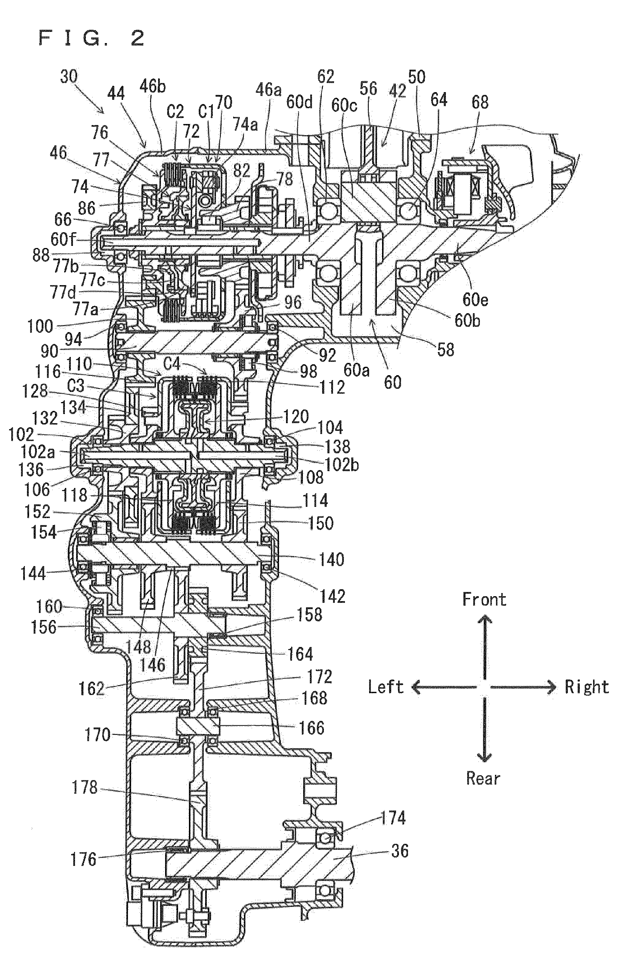

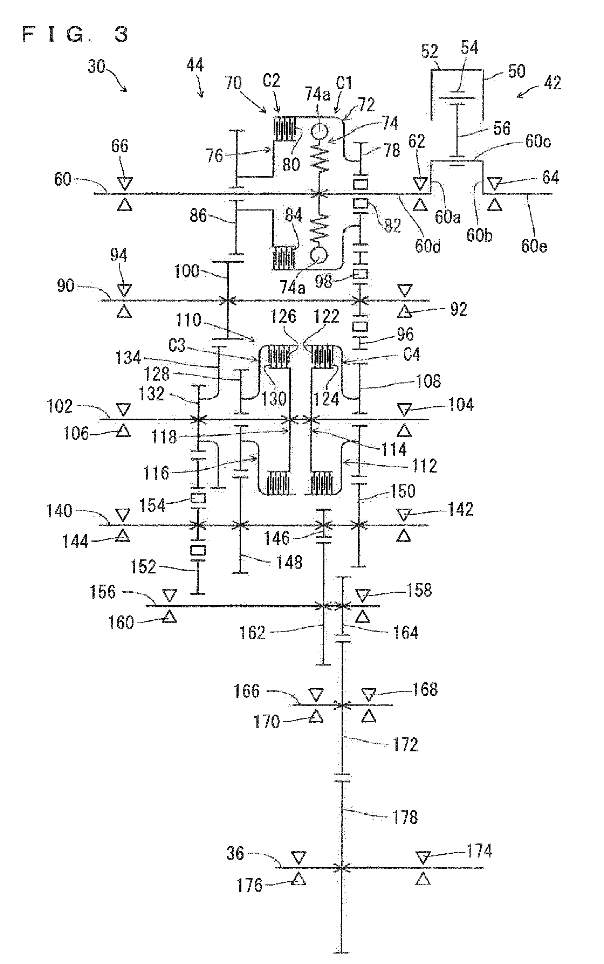

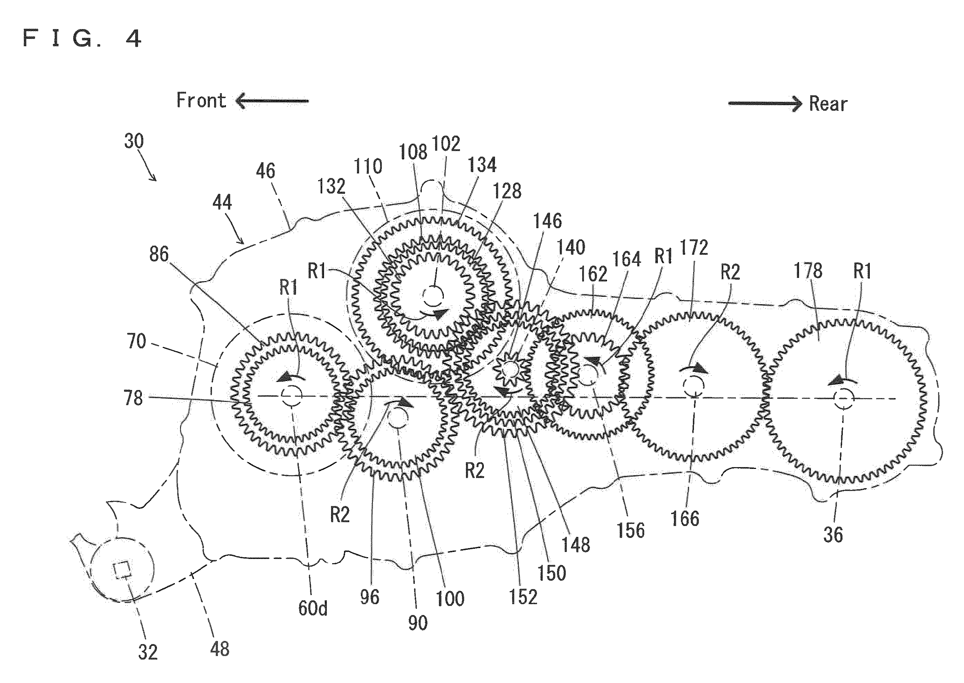

Fig. 2 is an illustrative sectional view showing an internal structure of the engine unit 30. Fig. 3 is a schematic diagram which shows constituent elements of the engine unit 30. Fig. 4 is an illustrative side view showing the engine unit 30.

Referring to Fig. 1 through Fig. 4, the engine unit 30 includes an engine 42 (see Fig. 2 and Fig. 3), the transmission apparatus 44 having a casing 46 (see Fig. 2 and Fig. 4), and the engine bracket 48 (see Fig. 1 and Fig. 4).

Referring to Fig. 2, the casing 46 includes a casing main body 46a and a cover member 46b attached to a left end portion of the casing main body 46a. Referring to Fig. 2 and Fig. 3, the engine 42 has a cylinder body 50 (Fig. 2 shows only part thereof) which is connected with a front end portion of the casing main body 46a (see Fig. 2) and extends forward; a cylinder head 52 (see Fig. 3) provided at a front end portion of the cylinder body 50; a piston 54 (see Fig. 3) provided inside the cylinder body 50; and a connecting rod 56 (Fig. 2 shows only part thereof) which is connected with the piston 54. Referring to Fig. 2, a crank case 58 is formed behind the cylinder body 50 in the casing 46.

Referring to Fig. 2 and Fig. 3, the transmission apparatus 44 includes a crank shaft 60. The crank shaft 60 is provided at a front end space inside the casing 46 (see Fig. 2). The crank shaft 60 has a pair of web portions 60a, 60b disposed in the crank case 58 (see Fig. 2); a crank pin 60c connecting the web portions 60a, 60b with each other; a crank journal 60d extending leftward from the web portion 60a; and a crank journal 60e extending rightward from the web portion 60b. The crank pin 60c is connected with a rear end portion of the connecting rod 56.

The crank shaft 60 is supported rotatably by the casing 46 (see Fig. 2) via a bearing 62 provided at a right end portion of the crank journal 60d; a bearing 64 provided at a left end portion of the crank journal 60e; and a bearing 66 provided at a left end portion of the crank journal 60d.

Referring to Fig. 4, the crank journal 60d (the crank shaft 60 (see Fig. 2)) makes rotation in a first direction R1 based on driving power generated by the engine 42 (see Fig. 2). As the crank journal 60d (the crank shaft 60) rotates in the first direction R1, rotating shafts 102, 156 and the output shaft 36 to be described later rotate in the first direction R1 whereas rotating shafts 90, 140, 166 to be described later rotate in a second direction R2 (the opposite direction to the first direction R1) in the transmission apparatus 44.

Referring to Fig. 2, the crank journal 60e has its right end portion connected with a generator 68. The generator 68 generates electricity based on the rotation of the crank journal 60e.

The crank journal 60d has an oil passage 60f formed therein. The oil passage 60f opens at a left end surface of the crank journal 60d and an outer circumferential surface of the crank journal 60d.

Referring to Fig. 2 and Fig. 3, a first clutch unit 70 is provided coaxially with the crank journal 60d. The first clutch unit 70 includes a cylindrical clutch housing 72, an inner member 74 provided inside the clutch housing 72, and an inner member 76 provided on a more leftward side than the inner member 74.

A gear 78 is attached to a right end portion of the clutch housing 72 whereas on a left end portion of the clutch housing 72 a plurality of annular friction discs 80 (see Fig. 3) are attached. The clutch housing 72, the gear 78 and the friction discs 80 rotate integrally with each other.

The gear 78 is attached to the crank journal 60d via a one-way clutch 82. The one-way clutch 82 does not transmit rotations of the crank journal 60d in the first direction R1 (see Fig. 4), from the crank journal 60d to the gear 78 (the clutch housing 72) while it transmits rotations of the gear 78 (the clutch housing 72) in the first direction R1 (see Fig. 4), from the gear 78 to the crank journal 60d. Therefore, the one-way clutch 82 does not transmit the driving power generated by the engine 42 to the gear 78. It should be noted here that if the crank journal 60d and the gear 78 (the clutch housing 72) are both rotating in the first direction R1 (see Fig. 4) and the crank journal 60d is rotating faster than the gear 78 (the clutch housing 72), the one-way clutch 82 does not transmit rotation of the gear 78 (the clutch housing 72) in the first direction R1 (see Fig. 4) to the crank journal 60d. Since the one-way clutch 82 can be provided by a variety of known one-way clutches, the one-way clutch 82 will not be described in any more detail.

Referring to Fig. 2 and Fig. 3, the inner member 74 has a plurality of clutch shoes 74a. The inner member 74 is attached to the crank journal 60d so as to rotate integrally with the crank journal 60d. In the present embodiment, the clutch housing 72 and the inner member 74 function as a centrifugal clutch portion C1. In the clutch portion C1, the plurality of clutch shoes 74a of the inner member 74 make contact with the clutch housing 72 when the rotation speed of the crank journal 60d reaches a predetermined speed. Thus, rotation of the crank journal 60d is transmitted to the clutch housing 72 via the inner member 74. As a result, the clutch housing 72 and the gear 78 rotate in the first direction R1 (see Fig. 4). Since the inner member 74 can be configured using a variety of known centrifugal clutch structures, configuration of the inner member 74 will not be described in any more detail.

Hereinafter, a state where the inner member 74 is in contact with the clutch housing 72 will be described as the clutch portion C1 is in engagement, whereas a state where the inner member 74 is not in contact with the clutch housing 72 will be described as the clutch portion C1 is not in engagement. It should be noted here that in the transmission apparatus 44, the clutch portion C1 functions as a clutch for the 1st-speed gear position.

The inner member 76 is attached to the crank journal 60d via a collar, for example, rotatably with respect to the crank journal 60d. Referring to Fig. 2, the inner member 76 has a presser 77. The presser 77 has a guide member 77a and a pressure plate 77b. The pressure plate 77b is slidable with respect to the guide member 77a. The guide member 77a and the pressure plate 77b form an oil chamber 77c. The oil chamber 77c communicates with the oil path 60f. The pressure plate 77b has a leak hole 77d penetrating the pressure plate 77b in its thickness direction (in the left-right direction in the present embodiment) to communicate with the oil chamber 77c. The pressure plate 77b is urged by an unillustrated urging member toward the guide member 77a (rightward in the present embodiment).

Referring to Fig. 3, the inner member 76 has its outer circumferential portion provided with a plurality of annular clutch discs 84 whereas the inner member 76 has its left end portion provided with a gear 86. The inner member 76, the clutch discs 84 and the gear 86 rotate integrally with each other. The friction discs 80 and the clutch discs 84 are disposed alternately to each other.

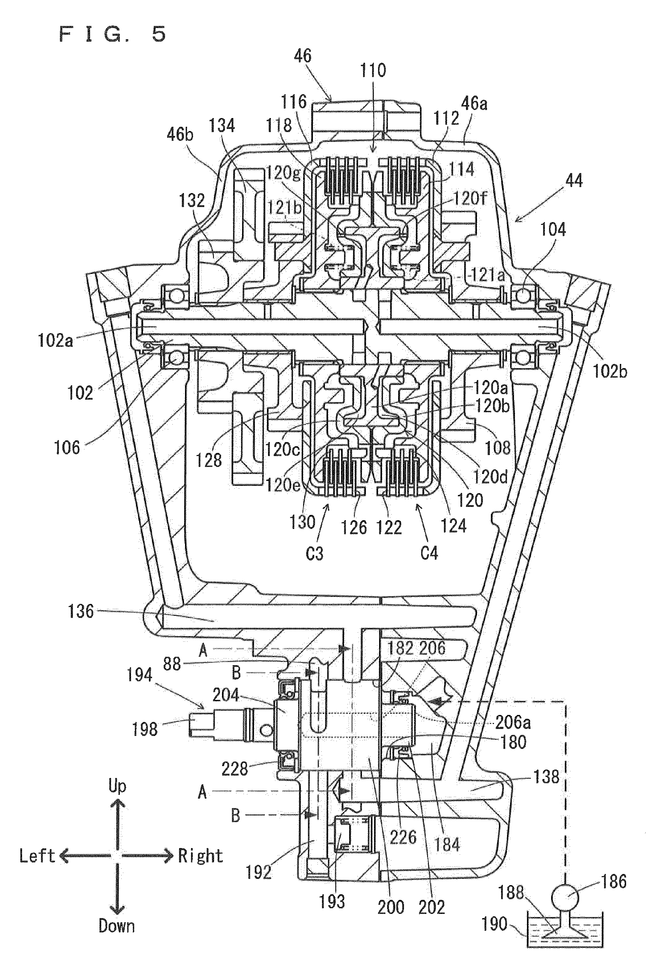

In the present embodiment, the clutch housing 72, the inner member 76, the friction discs 80 (see Fig. 3), and the clutch discs 84 (see Fig. 3) function as a hydraulic clutch portion C2. In the clutch portion C2, the oil chamber 77c (see Fig. 2) of the inner member 76 is supplied with oil from an oil pan 190 to be described later (see Fig. 5) via an oil passage 88 (see Fig. 2) formed in the casing 46 (see Fig. 2) and the oil passage 60f (see Fig. 2) of the crank journal 60d. Thus, the pressure plate 77b (see Fig. 2) moves leftward, and the friction discs 80 (see Fig. 3) are pressed by the pressure plate 77b (see Fig. 2) to the clutch discs 84 (see Fig. 3). As a result, rotation of the clutch housing 72 is transmitted, via the friction discs 80 (see Fig. 3) and the clutch discs 84 (see Fig. 3), to the inner member 76, causing the inner member 76 and the gear 86 to rotate in the first direction R1 (see Fig. 4).

Referring to Fig. 2, in the present embodiment, the pressure plate 77b is urged rightward by an unillustrated urging member as mentioned earlier. Also, since the oil chamber 77c in the inner member 76 communicates with the leak hole 77d, part of oil in the oil chamber 77c is discharged from the leak hole 77d. Therefore, as oil supply to the oil chamber 77c is stopped, the amount of oil in the oil chamber 77c decreases, and the pressure plate 77b moves rightward. As a result, contact between the friction discs 80 (see Fig. 3) and the clutch discs 84 (see Fig. 3) is lost, and the transmission of rotation from the clutch housing 72 to the inner member 76 ceases. Since the inner member 76 can be configured using a variety of known hydraulic clutch structures, configuration of the inner member 76 will not be described in any more detail. The oil supply paths to the clutch portion C2 will be described later. In the present embodiment, the clutch portion C2 represents the third hydraulic clutch portion.

Hereinafter, a state where the friction discs 80 and the clutch discs 84 are in contact with each other and rotating together at substantially the same speed will be expressed that the clutch portion C2 is engaged (in engagement); a state where the friction discs 80 and the clutch discs 84 are sliding and rotating with respect to each other will be expressed that the clutch portion C2 is half-engaged (in a half-clutch state); and a state where the friction discs 80 and the clutch discs 84 are not in contact with each other will be expressed that the clutch portion C2 is disengaged (in disengagement). In the transmission apparatus 44, the clutch portion C2 functions as a clutch for the 2nd-speed gear position.

Referring to Fig. 2 and Fig. 4, the rotating shaft 90 is parallel to the crank journal 60d at an obliquely rearward and downward position from the crank journal 60d in the casing 46. Referring to Fig. 2, the rotating shaft 90 has its right end portion rotatably supported by the casing 46 via a bearing 92 whereas the rotating shaft 90 has its left end portion rotatably supported by the casing 46 via a bearing 94.

Referring to Fig. 2 and Fig. 3, a gear 96 is provided coaxially with the rotating shaft 90 on a more leftward side than the bearing 92. The gear 96 is attached to the rotating shaft 90 via a one-way clutch 98. The gear 96 engages with the gear 78. The one-way clutch 98 does not transmit rotation of the rotating shaft 90 in the second direction R2 (see Fig. 4) from the rotating shaft 90 to the gear 96 while it transmits rotation of the gear 96 in the second direction R2 (see Fig. 4) from the gear 96 to the rotating shaft 90. When the rotating shaft 90 and the gear 96 are rotating in the second direction R2 (see Fig. 4) and the rotating shaft 90 is rotating faster than the gear 96, the one-way clutch 98 does not transmit rotation of the gear 96 in the second direction R2 (see Fig. 4) to the rotating shaft 90.

A gear 100 is provided coaxially with the rotating shaft 90 on a more rightward side than the bearing 94. The gear 100 is attached to the rotating shaft 90 for integrated rotation with the rotating shaft 90. The gear 100 engages with the gear 86. Thus, the gear 100 is rotated as the rotating shaft 90 rotates or as the gear 86 transmits rotation to the gear 100.

In the transmission apparatus 44, if the clutch portion C1 only is in engagement (if the gear position in the transmission apparatus 44 is for the 1st-speed), rotation of the crank journal 60d is transmitted to the gear 96 via the clutch portion C1 and the gear 78. Thus, the gear 96 rotates in the second direction R2 (see Fig. 4). Since the one-way clutch 98 transmits rotation of the gear 96 in the second direction R2 (see Fig. 4) to the rotating shaft 90 as mentioned earlier, the rotation of the gear 96 in the second direction R2 (see Fig. 4) causes the rotating shaft 90 to rotate in the second direction R2 (see Fig. 4). Thus, the gear 100 rotates in the second direction R2 (see Fig. 4).

On the other hand, if the clutch portion C1 and the clutch portion C2 are both in engagement (if the gear position in the transmission apparatus 44 is for the 2nd or a higher speed gear position), rotation of the crank journal 60d is transmitted to the gear 78 as well as to the gear 86 via the clutch portion C2. Thus, the gear 86 rotates in the first direction R1 (see Fig. 4) at the same speed as the gear 78. Since the gear 100 is in engagement with the gear 86, rotation of the gear 86 in the first direction R1 (see Fig. 4) causes the gear 100 and the rotating shaft 90 to rotate in the second direction R2 (see Fig. 4). In the transmission apparatus 44, a gear ratio (speed reduction ratio) between the gear 86 and the gear 100 is smaller than a gear ratio between the gear 78 and the gear 96. Therefore, when the gear 86 rotates the gear 180, the gear 100 and the rotating shaft 90 rotate faster than the gear 96. As described earlier, the one-way clutch 98 does not transmit rotation of the gear 96 in the second direction R2 (see Fig. 4) to the rotating shaft 90 if the rotating shaft 90 is rotating faster than the gear 96. Therefore, if both of the clutch portion C1 and the clutch portion C2 are in engagement (i.e. if the transmission apparatus 44 is set to the 2nd or a higher speed gear position), the gear 96 makes idle rotation.

Referring to Fig. 2 and Fig. 4, the rotating shaft 102 is parallel to the rotating shaft 90 at an obliquely rearward and upward position from the rotating shaft 90. Referring to Fig. 2, the rotating shaft 102 has its right end portion rotatably supported by the casing 46 via a bearing 104 whereas the rotating shaft 102 has its left end portion rotatably supported by the casing 46 via a bearing 106.

Fig. 5 is an illustrative sectional view showing a structure near the rotating shaft 102.

Referring to Fig. 5, the rotating shaft 102 has oil passages 102a, 102b formed therein. The oil passage 102a opens in a left end surface of the rotating shaft 102 and in an outer circumferential surface of the rotating shaft 102. The oil passage 102b opens in a right end surface of the rotating shaft 102 and in an outer circumferential surface of the rotating shaft 102.

A gear 108 is provided coaxially with the rotating shaft 102 on a more leftward side than the bearing 104. The gear 108 is attached to the rotating shaft 102 rotatably with respect to the rotating shaft 102 via a bushing or a collar for example.

A second clutch unit 110 is provided coaxially with the rotating shaft 102 on a more leftward side than the gear 108. The second clutch unit 110 includes a cylindrical clutch housing 112; an inner member 114 provided inside the clutch housing 112; a cylindrical clutch housing 116 provided on a more leftward side than the clutch housing 112; an inner member 118 provided inside the clutch housing 116; and a presser 120 provided between the inner member 114 and the inner member 118.

The gear 108 is attached to a right end portion of the clutch housing 112. At a left end portion of the clutch housing 112, a plurality of annular friction discs 122 are attached. The gear 108, the clutch housing 112 and the friction discs 122 rotate integrally with each other.

The inner member 114 is attached to the rotating shaft 102 so as to rotate integrally with the rotating shaft 102. A plurality of annular clutch discs 124 are attached to an outer circumferential portion of the inner member 114. The friction discs 122 and the clutch discs 124 are disposed alternately to each other.

The clutch housing 116 has its right end portion provided with a plurality of annular friction discs 126. The clutch housing 116 has its left end portion provided with a gear 128. The gear 128 is attached to the rotating shaft 102 rotatably with respect to the rotating shaft 102 via a bushing or a collar for example. The clutch housing 116, the clutch discs 126 and the gear 128 rotate integrally with each other.

The inner member 118 is attached to the rotating shaft 102 so as to rotate integrally with the rotating shaft 102. A plurality of annular clutch discs 130 are attached to an outer circumferential portion of the inner member 118. The friction discs 126 and the clutch discs 130 are disposed alternately to each other.

The presser 120 includes a guide member 120a, a pressure plate 120b and a pressure plate 120c. The guide member 120a is provided in an outer circumferential surface of the rotation shaft 102 coaxially with the rotation shaft 102. The pressure plate 120b is slidable with respect to the guide member 120a between the inner member 114 and the guide member 120a. The pressure plate 120c is slidable with respect to the guide member 120a between the inner member 118 and the guide member 120a.

The guide member 120a and the pressure plate 120b form an oil chamber 120d whereas the guide member 120a and the pressure plate 120c form an oil chamber 120e. The oil chamber 120d communicates with the oil path 102b whereas the oil chamber 120e communicates with the oil path 102a. The pressure plate 120b has a leak hole 120f penetrating the pressure plate 120b in its thickness direction (in the left-right direction in the present embodiment) to communicate with the oil chamber 120d. The pressure plate 120c has a leak hole 120g penetrating the pressure plate 120c in its thickness direction (in the left-right direction in the present embodiment) to communicate with the oil chamber 120e.

A plurality of urging members 121a (only one urging member 121a is shown in Fig. 5) are provided between the inner member 114 and the pressure plate 120b. The urging members 121a are provided by coil springs for example. The pressure plate 120b is urged by the urging members 121a toward the guide member 120a (leftward in the present embodiment).

A plurality of urging members 121b (only one urging member 121b is shown in Fig. 5) are provided between the inner member 118 and the pressure plate 120c. The urging members 121b are provided by coil springs for example. The pressure plate 120c is urged by the urging members 121b toward the guide member 120a (rightward in the present embodiment).

A gear 132 is provided coaxially with the rotating shaft 102 on the left side of the gear 128. The gear 132 is attached to the rotating shaft 102 so as to rotate integrally with the rotating shaft 102. The gear 132 has its right end portion, where a gear 134 is attached to rotate integrally with the gear 132. The gear 134 engages with a gear 100 (see Fig. 2 and Fig.3). Thus, the gear 134 rotates in the first direction R1 (see Fig. 4) based on rotation transmitted from the gear 100. Therefore, the gear 132 and the rotating shaft 102 rotate in the first direction R1 (see Fig. 4).

In the present embodiment, the clutch housing 116, the inner member 118, the presser 120, the friction discs 126 and the clutch discs 130 function as a hydraulic clutch portion C3. The clutch housing 112, the inner member 114, the presser 120, the friction discs 122 and the clutch discs 124 function as a hydraulic clutch portion C4.

In the clutch portion C3, the oil chamber 120e of the presser 120 is supplied with oil from the oil pan 190 to be described later via an oil passage 136 formed in the casing 46 and the oil passage 102a of the rotating shaft 102. Thus, the pressure plate 120c moves leftward, the friction discs 126 are pressed onto the clutch discs 130 by the presser plate 120c. As a result, rotation of the rotating shaft 102 in the first direction R1 (see Fig. 4) is transmitted to the clutch housing 116 via the inner member 118, the clutch discs 130 and the friction discs 126 to cause the clutch housing 116 and the gear 128 to rotate in the first direction R1 (see Fig. 4).

As has been described, the pressure plate 120c is urged rightward by the urging members 121b in the present embodiment. Also, since the oil chamber 120e communicates with the leak hole 120g, part of oil in the oil chamber 120e is discharged from the leak hole 120g. Therefore, as oil supply from the oil path 102a to the oil chamber 120e is stopped, the amount of oil in the oil chamber 120e decreases, and the pressure plate 120c moves rightward. As a result, the friction discs 126 and the clutch discs 130 are disengaged from each other, and transmission of rotation from the inner member 118 to the clutch housing 116 ceases. The oil supply paths to the clutch portion C3 will be described later. In the present embodiment, the clutch portion C3 represents the first hydraulic clutch portion.

In the clutch portion C4, the oil chamber 120d of the presser 120 is supplied with oil from the oil pan 190 to be described later via an oil passage 138 formed in the casing 46 and the oil passage 102b of the rotating shaft 102. Thus, the pressure plate 120b moves rightward, the friction discs 122 are pressed onto the clutch discs 124 by the presser plate 120b. As a result, rotation of the rotating shaft 102 in the first direction R1 (see Fig. 4) is transmitted to the clutch housing 112 via the inner member 114, the clutch discs 124 and the friction discs 122 to cause the clutch housing 112 and the gear 108 to rotate in the first direction R1 (see Fig. 4).

As has been described, the pressure plate 120b is urged leftward by the urging members 121a in the present embodiment. Also, since the oil chamber 120d communicates with the leak hole 120f, part of oil in the oil chamber 120d is discharged from the leak hole 120f. Therefore, as oil supply from the oil path 102b to the oil chamber 120d is stopped, the amount of oil in the oil chamber 120d decreases, and the pressure plate 120b moves leftward. As a result, the friction discs 122 and the clutch discs 124 are disengaged from each other, and transmission of rotation from the inner member 114 to the clutch housing 112 ceases. In the present embodiment, the clutch portion C4 represents the second hydraulic clutch portion.

The inner member 114, the inner member 118 and the presser 120 can be configured using a variety of known hydraulic clutch structures, so no more details of the inner member 114, the inner member 118 or the presser 120 will be given herein.

Hereinafter, a state where the friction discs 126 and the clutch discs 130 are in contact with each other and rotating together at substantially the same speed will be expressed that the clutch portion C3 is engaged (in engagement); a state where the friction discs 126 and the clutch discs 130 are sliding and rotating with respect to each other will be expressed that the clutch portion C3 is half-engaged (in a half-clutch state); and a state where the friction discs 126 and the clutch discs 130 are not in contact with each other will be expressed that the clutch portion C3 is disengaged (in disengagement). Likewise, a state where the friction discs 122 and the clutch discs 124 are in contact with each other and rotating together at substantially the same speed will be expressed that the clutch portion C4 is engaged (in engagement); a state where the friction discs 122 and the clutch discs 124 are sliding and rotating with respect to each other will be expressed that the clutch portion C4 is half-engaged (in a half-clutch state); and a state where the friction discs 122 and the clutch discs 124 are not in contact with each other will be expressed that the clutch portion C4 is disengaged (in disengagement). In the transmission apparatus 44, the clutch portion C3 functions as a clutch for the 3rd-speed gear position, and the clutch portion C4 functions as a clutch for the 4th-speed gear position.

Referring to Fig. 2 and Fig. 4, in the casing 46, the rotating shaft 140 is parallel to the rotating shaft 102 at an obliquely rearward and downward position from the rotating shaft 102. Referring to Fig. 2, the rotating shaft 140 has its right end portion rotatably supported by the casing 46 via a bearing 142 whereas the rotating shaft 140 has its left end portion rotatably supported by the casing 46 via a bearing 144.

Referring to Fig. 2 and Fig. 3, gear teeth 146 are provided around an outer circumferential surface of the rotating shaft 140 at its substantially center portion in terms of the left-right direction. A gear 148 is provided coaxially with the rotating shaft 140 on a more leftward side than the gear teeth 146. The gear 148 is attached to the rotating shaft 140 so as to rotate integrally with the rotating shaft 140. The gear 148 engages with the gear 128. Thus, rotation of the rotating shaft 102 in the first direction R1 (see Fig. 4) is transmitted to the gear 148 via the clutch portion C3 and the gear 128 if the clutch portion C3 is in engagement. Thus, the gear 148 and the rotating shaft 140 rotate in the second direction R2 (see Fig. 4).

A gear 150 is provided coaxially with the rotating shaft 140 on a more rightward side than the gear teeth 146. The gear 150 is attached to the rotating shaft 140 so as to rotate integrally with the rotating shaft 140. The gear 150 engages with the gear 108. Thus, rotation of the rotating shaft 102 in the first direction R1 (see Fig. 4) is transmitted to the gear 150 via the clutch portion C4 and the gear 108 if the clutch portion C4 is in engagement. Thus, the gear 150 and the rotating shaft 140 rotate in the second direction R2 (see Fig. 4). In the transmission apparatus 44, the clutch portion C4 does not make engagement if the clutch portion C3 is in engagement. Also, the clutch portion C3 does not make engagement if the clutch portion C4 is in engagement.

A gear 152 is provided coaxially with the rotating shaft 140 between the gear 148 and the bearing 144. The gear 152 engages with the gear 132. The gear 152 is attached to the rotating shaft 140 via a one-way clutch 154. The one-way clutch 154 does not transmit rotation of the rotating shaft 140 in the second direction R2 (see Fig. 4) from the rotating shaft 140 to the gear 152 but transmits rotation of the gear 152 in the second direction R2 (see Fig. 4) from the gear 152 to the rotating shaft 140. When the rotating shaft 140 and the gear 152 are rotating in the second direction R2 (see Fig. 4) and the rotating shaft 140 is rotating faster than the gear 152, the one-way clutch 154 does not transmit rotation of the gear 152 in the second direction R2 (see Fig. 4) to the rotating shaft 140.

In the transmission apparatus 44, if neither the clutch portion C3 nor the clutch portion C4 is in engagement (if the gear position is set to the 1st-speed or the 2nd-speed gear position), rotation of the gear 100 in the second direction R2 (see Fig. 4) is transmitted to the gear 152 via the gear 134 and the gear 132. Thus, the gear 152 rotates in the second direction R2 (see Fig. 4). Since the one-way clutch 154 transmits rotation of the gear 152 in the second direction R2 (see Fig. 4) to the rotating shaft 140 as mentioned earlier, the rotation of the gear 152 in the second direction R2 (see Fig. 4) causes the rotating shaft 140 to rotate in the second direction R2 (see Fig. 4).

If the clutch portion C3 is in engagement and the clutch portion C4 is not (if the gear position is set to the 3rd-speed gear position), rotation of the gear 100 is transmitted to the gear 152 via the gear 134 and the gear 132, and to the gear 148 as well via the gear 134, the gear 132, the rotating shaft 102, the clutch portion C3 and the gear 128. Thus, the gear 148 and the rotating shaft 140 rotate in the second direction R2 (see Fig. 4). In the transmission apparatus 44, a gear ratio (speed reduction ratio) between the gear 128 and the gear 148 is smaller than a gear ratio between the gear 132 and the gear 152. Therefore, the gear 148 and the rotating shaft 140 rotate faster than the gear 152. As described earlier, the one-way clutch 154 does not transmit rotation of the gear 152 in the second direction R2 (see Fig. 4) to the rotating shaft 140 if the rotating shaft 140 is rotating faster than the gear 152. Therefore, the gear 152 makes idle rotation if the transmission apparatus 44 is set to the 3rd-speed gear position.

If the clutch portion C4 is in engagement and the clutch portion C3 is not (if the gear position is set to the 4th-speed gear position), rotation of the gear 100 is transmitted to the gear 152 via the gear 134 and the gear 132, and to the gear 150 as well via the gear 134, the gear 132, the rotating shaft 102, the clutch portion C4 and the gear 108. Thus, the gear 150 and the rotating shaft 140 rotate in the second direction R2 (see Fig. 4). In the transmission apparatus 44, a gear ratio (speed reduction ratio) between the gear 108 and the gear 150 is smaller than a gear ratio between the gear 132 and the gear 152. Therefore, the gear 150 and the rotating shaft 140 rotate faster than the gear 152. As described earlier, the one-way clutch 154 does not transmit rotation of the gear 152 in the second direction R2 (see Fig. 4) to the rotating shaft 140 if the rotating shaft 140 is rotating faster than the gear 152. Therefore, the gear 152 makes idle rotation if the transmission apparatus 44 is set to the 4th-speed gear position. A gear ratio (speed reduction ratio) between the gear 108 and the gear 150 is smaller than a gear ratio between the gear 128 and the gear 148. Therefore, when the clutch portion C4 is in engagement, the rotating shaft 140 rotates faster than when the clutch portion C3 is in engagement.

Referring to Fig. 2 and Fig. 4, in the casing 46, the rotating shaft 156 is parallel to the rotating shaft 140 at a more rearward position than the rotating shaft 140. Referring to Fig. 2, the rotating shaft 156 has its right end portion rotatably supported by the casing 46 via a bearing 158 whereas the rotating shaft 156 has its left end portion rotatably supported by the casing 46 via a bearing 160.

Referring to Fig. 2 and Fig. 3, a gear 162 and a gear 164 are provided coaxially with the rotating shaft 156 between the bearing 158 and the bearing 160. The gear 162 and the gear 164 are attached to the rotating shaft 156 so as to rotate integrally with the rotating shaft 156. The gear 162 engages with the gear teeth 146 of the rotating shaft 140. Therefore, rotation of the rotating shaft 140 is transmitted to the gear 162 via the gear teeth 146. Thus, the gear 162, the rotating shaft 156 and the gear 164 rotate in the first direction R1 (see Fig. 4).

Referring to Fig. 2 and Fig. 4, in the casing 46, the rotating shaft 166 is parallel to the rotating shaft 156 at a more rearward position than the rotating shaft 156. Referring to Fig. 2, the rotating shaft 166 has its right end portion rotatably supported by the casing 46 via a bearing 168 whereas the rotating shaft 166 has its left end portion rotatably supported by the casing 46 via a bearing 170.

Referring to Fig. 2 and Fig. 3, a gear 172 is provided coaxially with the rotating shaft 166 between the bearing 168 and the bearing 170. The gear 172 is attached to the rotating shaft 166 so as to rotate integrally with the rotating shaft 166. The gear 172 engages with the gear 164. Therefore, rotation of the rotating shaft 156 is transmitted to the gear 172 via the gear 164. Thus, the gear 172 and the rotating shaft 166 rotate in the second direction R2 (see Fig. 4).

Referring to Fig. 2 and Fig. 4, the output shaft 36 is parallel to the rotating shaft 166 at a more rearward position than the rotating shaft 166. Referring to Fig. 2, the output shaft 36 is rotatably supported by the casing 46 via a bearing 174 and a bearing 176. The output shaft 36 protrudes rightward from the casing 46. Inside the casing 46, a gear 178 is provided coaxially with the output shaft 36. The gear 178 is attached to the output shaft 36 so as to rotate integrally with the rotating shaft 36. The output shaft 36 has a right end portion (not illustrated), where the rear wheel 34 (see Fig. 1) is attached to rotate integrally with the output shaft 36. The gear 178 engages with the gear 172. Therefore, rotation of the gear 172 is transmitted to the output shaft 36 via the gear 178. Thus, the output shaft 36 and the rear wheel 34 (see Fig. 1) rotate in the first direction R1 (see Fig. 4). As a result, the scooter 10 (see Fig. 1) moves forward.

Next, a transmission route of rotation from the crank journal 60d to the output shaft 36 in the transmission apparatus 44 will be described briefly with reference to Fig. 3.

First, as the crank journal 60d (the crank shaft 60) has attained a certain predetermined speed of rotation, the clutch portion C1 becomes engaged to set the transmission apparatus 44 to the 1st-speed gear position. In this situation, there is no engagement in the clutch portion C2, the clutch portion C3 or the clutch portion C4. Therefore, rotation of the crank journal 60d is transmitted to the output shaft 36 via the clutch portion C1, the gear 78, the gear 96, the one-way clutch 98, the rotating shaft 90, the gear 100, the gear 134, the gear 132, the gear 152, the one-way clutch 154, the rotating shaft 140, the gear teeth 146, the gear 162, the rotating shaft 156, the gear 164, the gear 172 and the gear 178.

Next, the clutch portion C2 is engaged, whereby the transmission apparatus 44 is set to the 2nd-speed gear position. In this situation, the clutch portion C1 is in engagement but the clutch portion C3 and the clutch portion C4 are not in engagement. Therefore, rotation of the crank journal 60d is transmitted to the output shaft 36 via the clutch portion C1, the clutch portion C2, the gear 86, the gear 100, the gear 134, the gear 132, the gear 152, the one-way clutch 154, the rotating shaft 140, the gear teeth 146, the gear 162, the rotating shaft 156, the gear 164, the gear 172 and the gear 178.

Next, the clutch portion C3 is engaged, whereby the transmission apparatus 44 is set to the 3rd-speed gear position. In this situation, the clutch portion C1 and the clutch portion C2 are in engagement but the clutch portion C4 is not. Therefore, rotation of the crank journal 60d is transmitted to the output shaft 36 via the clutch portion C1, the clutch portion C2, the gear 86, the gear 100, the gear 134, the gear 132, the rotating shaft 102, the clutch portion C3, the gear 128, the gear 148, the rotating shaft 140, the gear teeth 146, the gear 162, the rotating shaft 156, the gear 164, the gear 172 and the gear 178.

Next, the clutch portion C4 is engaged, whereby the transmission apparatus 44 is set to the 4th-speed gear position. In this situation, the clutch portion C1 and the clutch portion C2 are in engagement but the third clutch portion C3 is not. Therefore, rotation of the crank journal 60d is transmitted to the output shaft 36 via the clutch portion C1, the clutch portion C2, the gear 86, the gear 100, the gear 134, the gear 132, the rotating shaft 102, the clutch portion C4, the gear 108, the gear 150, the rotating shaft 140, the gear teeth 146, the gear 162, the rotating shaft 156, the gear 164, the gear 172 and the gear 178.

Next, detailed description will be made for oil supply paths to the oil chamber 77c of the clutch portion C2, to the oil chamber 120e of the clutch portion C3 and to the oil chamber 120d of the clutch portion C4. Hereinafter, the expression that the clutch portion C2 is supplied with oil means that the oil chamber 77c is supplied with oil; that the clutch portion C3 is supplied with oil means that the oil chamber 120e is supplied with oil; and that the clutch portion C4 is supplied with oil means that the oil chamber 120d is supplied with oil.

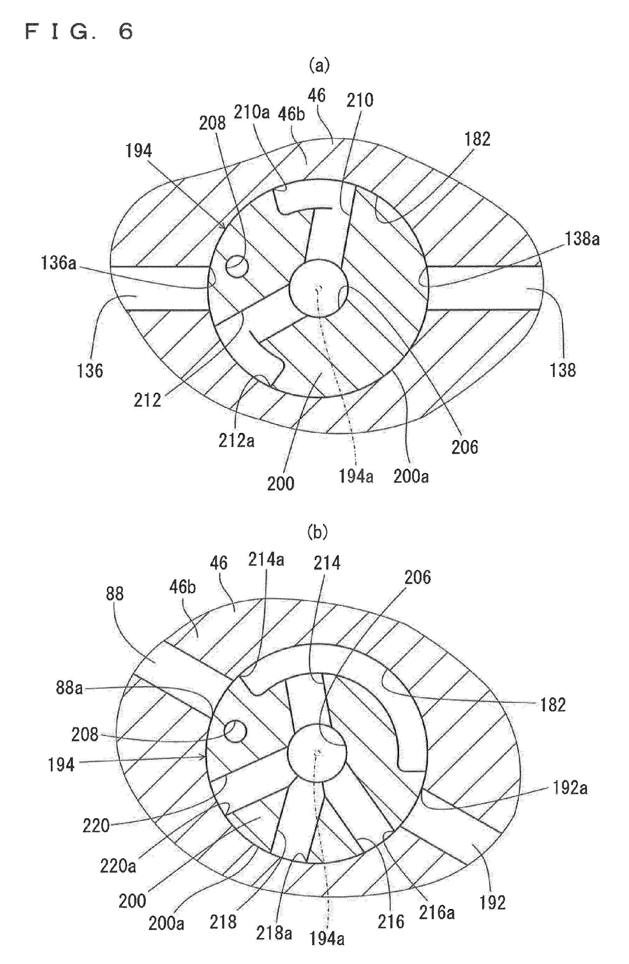

Fig. 6 includes drawings for describing oil supply paths to the clutch portion C2, to the clutch portion C3 and to the clutch portion C4. Fig. 6(a) shows a sectional view taken in lines A-A in Fig. 5 whereas Fig. 6(b) is a sectional view taken in lines B-B in Fig. 5.

Referring to Fig. 5, the casing main body 46a of the casing 46 has a hollow portion 180 having a circular section, below the second clutch unit 110. Referring to Fig. 5 and Fig. 6, below the second clutch unit 110 (see Fig. 5), the cover member 46b of the casing 46 has a hollow portion 182. The hollow portion 182 communicates with the hollow portion 180 (see Fig. 5), has a circular section and has a greater diameter than the hollow portion 180.

The casing main body 46a of the casing 46 has an oil path 184 which communicates with the hollow portion 180. The oil path 184 communicates with the oil pan 190 via an oil pump 186 and a strainer 188. The oil pan 190 is provided inside the casing 46 and stores oil for supply to the transmission apparatus 44. The oil in the oil pan 190 is pumped by the oil pump 186 to flow through the strainer 188 and then to the oil path 184. In the present embodiment, the oil pan 190 represents the oil source whereas the oil path 184 represents the third oil path. The oil pump 186, the strainer 188 and the oil pan 190 can be provided by any appropriate ones from varieties of known oil pumps, strainers and oil pans. Therefore, no more description will be made for the oil pump 186, the strainer 188 or the oil pan 190.

Referring to Fig. 5 and Fig. 6(a), the oil path 136 and the oil path 138 communicate with the hollow portion 182. Referring to Fig. 6(a), in the present embodiment, the oil path 136 has an open end 136a in the hollow portion 182. The oil path 138 has an open end 138a in the hollow portion 182. These open ends 136a and 138a oppose to each other with the hollow portion 182 in between. In the present embodiment, the oil path 136 represents the first oil path whereas the oil path 138 represents the second oil path.

Referring to Fig. 5 and Fig. 6(b), the oil path 88 communicates with the hollow portion 182 at a position located on the left of the place where the oil paths 136, 138 communicate with the hollow portion 182. The cover member 46b of the casing 46 has an oil path 192 which communicates with the hollow portion 182. The oil path 192 communicates with the hollow portion 182 at a position located on the left from the place where the oil paths 136, 138 communicate with the hollow portion 182. Referring to Fig. 6(b), in the present embodiment, the oil path 88 has an open end 88a in the hollow portion 182. The oil path 192 has an open end 192a in the hollow portion 182. These open ends 88a and 192a oppose to each other with the hollow portion 182 in between.

Referring to Fig. 5, a relief valve 193 is provided in the cover member 46b below the hollow portion 182 in order to adjust oil pressure in the oil path 192. Since the relief valve 193 can be provided by any appropriate one from those already known, no details of the relief valve 193 will be described here.

A valve member 194 is provided pivotably inside the hollow portion 180 and the hollow portion 182. In other words, the valve member 194 is pivotable between the oil path 88, the oil path 136, the oil path 138, the oil path 184 and the oil path 192.

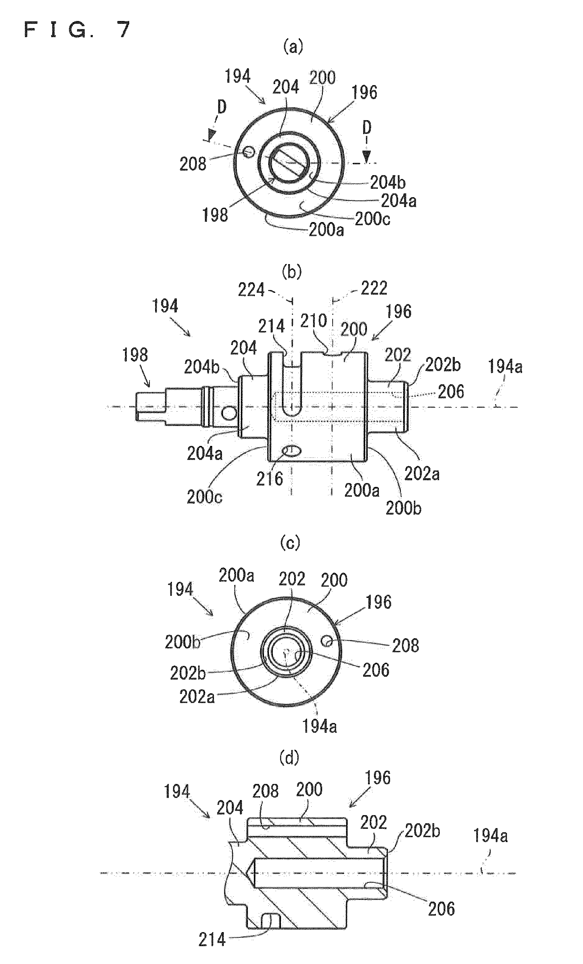

Fig. 7 includes drawings of the valve member 194; Fig. 7(a) is a front view of the valve member 194 (when the valve member 194 is viewed from the left in Fig. 5); Fig. 7(b) is a side view of the valve member 194; Fig. 7(c) is a rear view of the valve member 194 (when the valve member 194 is viewed from the right in Fig. 5); and fig. 7(d) is a sectional view taken in lines D-D in Fig. 7(a).

Referring to Fig. 7, the valve member 194 is substantially columnar and includes a main body portion 196 and a coupling portion 198. The main body portion 196 includes a cylindrical first portion 200; a cylindrical second portion 202 having a smaller diameter than the first portion 200; and a columnar third portion 204 having a smaller diameter than the first portion 200.

Referring to Figs. 7 (a) through 7 (c), the first portion 200 has an outer circumferential surface 200a extending in parallel to a pivot axis 194a of the valve member 194; an end surface 200b extending from an end portion (right end portion in the present embodiment) of the outer circumferential surface 200a toward an axial center (the pivot axis 194a) of the first portion 200; and an end surface 200c extending from another end portion (left end portion in the present embodiment) of the outer circumferential surface 200a toward an axial center of the first portion 200.

The second portion 202 has an outer circumferential surface 202a extending from the end surface 200b of the first portion 200 in parallel to the pivot axis 194a (rightward in the present embodiment); and an end surface 202b extending from an end portion (right end portion in the present embodiment) of the outer circumferential surface 202a toward an axial center (the pivot axis 194a) of the second portion 202.

The third portion 204 has an outer circumferential surface 204a extending from the end surface 200c of the first portion 200 in parallel to the pivot axis 194a (leftward in the present embodiment); and an end surface 204b extending from an end portion (left end portion in the present embodiment) of the outer circumferential surface 204a toward an axial center (the pivot axis 194a) of the third portion 204. In the present embodiment, the end surface 200b, the end surface 200c, the end surface 202b and the end surface 204b are vertical to the pivot axis 194a of the valve member 194.

Referring to Fig. 6 and Fig. 7, the valve member 194 has oil paths 206, 208 extending inside the valve member 194 in parallel to the pivot axis 194a; and oil paths 210, 212, 214, 216, 218, 220 (see Fig. 6) extending from the oil path 206 in directions vertical to the pivot axis 194a. The oil path 206 opens in parallel to the pivot axis 194a (rightward in the present embodiment) whereas the oil paths 210, 212, 214, 216, 218, 220 open in directions vertical to the pivot axis 194a (radially of the valve member 194). More specifically, the oil path 206 opens in the end surface 202b (see Fig. 7(c)) of the second portion 202 (see Fig. 7(c)) whereas the oil paths 210, 212, 214, 216, 218, 220 open in the outer circumferential surface 200a (see Fig. 6) of the first portion 200 (see Fig. 6). The oil path 208 penetrates the first portion 200.

Referring to Figs. 7(b) through 7(d), in the present embodiment, the oil path 206 is routed to pass on the pivot axis 194a, extending from a border region between the first portion 200 and the third portion 204 toward the end surface 202b of the second portion 202. Also, in the present embodiment, the oil path 206 opens on the pivot axis 194a.

In the present embodiment, the oil path 206 represents the fourth oil path; the oil path 210 represents the fifth oil path; the oil path 212 represents the sixth oil path; the oil path 88 represents the seventh oil path; and the oil path 214 represents the eighth oil path.

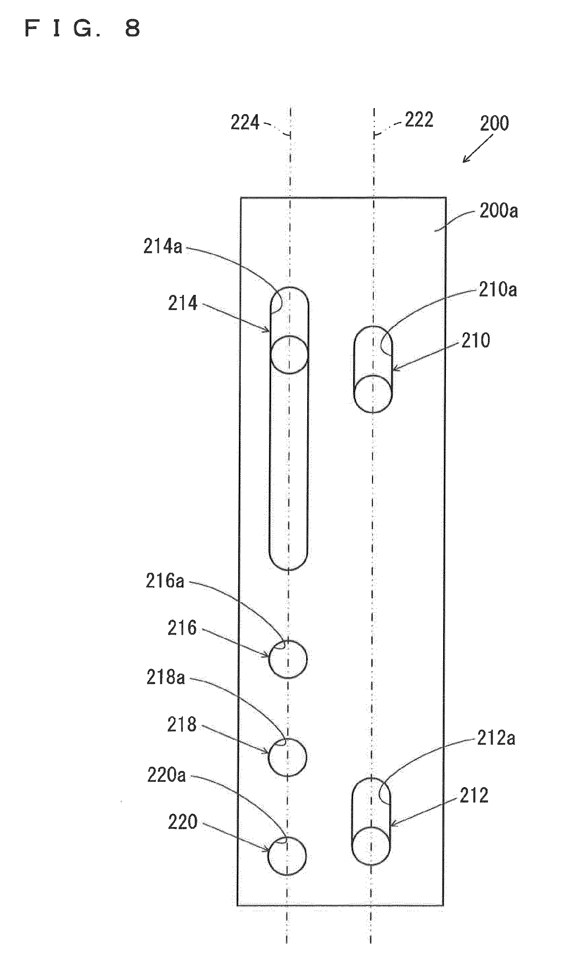

Fig. 8 is a development view showing the first portion 200 of the valve member 194.

Referring to Fig. 6(a), Fig. 7(b) and Fig. 8, the oil path 210 and the oil path 212 (see Fig. 6(a) and Fig. 8) are on a first hypothetical plane 222 (see Fig. 7(b) and Fig. 8) which is vertical to the pivot axis 194a (see Fig. 7(b)). In the present embodiment, the oil path 210 has its center on the first plane 222 in a direction parallel to the pivot axis 194a, and the oil path 212 has its center on the first plane 222 in a direction parallel to the pivot axis 194a.

Referring to Fig. 6(b) and Fig. 7(b), the oil path 214, the oil path 216, the oil path 218 (see Fig. 6(b) and Fig. 8) and the oil path 220 (see Fig. 6(b) and Fig. 8) are on a second hypothetical plane 224 (see Fig. 7(b) and Fig. 8) which is vertical to the pivot axis 194a (see Fig. 7(b)). Referring to Fig. 7(b), the second plane 224 is at a distance from the first plane 222 in the direction parallel to the pivot axis 194a. In the present embodiment, the oil path 214, the oil path 216, the oil path 218 and the oil path 220 have their centers on the second plane 224 in a direction parallel to the pivot axis 194a. It should be noted here that the first plane 222 is on the lines A-A in Fig. 5 whereas the second plane 224 is on the lines B-B in Fig. 5.

Referring to Fig. 6(a) and Fig. 8, the oil path 210 has a long open end 210a extending in a circumferential direction of the first portion 200. Likewise, the oil path 212 has a long open end 212a extending in the circumferential direction of the first portion 200. Referring to Fig. 6(b) and Fig. 8, the oil path 214 has a long open end 214a extending in the circumferential direction of the first portion 200. The oil path 216 has a circular open end 216a, the oil path 218 has a circular open end 218a, and the oil path 220 has a circular open end 220a.

Referring to Fig. 8, in the circumferential direction of the first portion 200, the open end 210a and the open end 212a have the same length as each other. In the circumferential direction of the first portion 200, the open end 210a and the open end 212a are shorter in their length than the open end 214a. In the circumferential direction of the first portion 200, the open end 210a and the open end 212a are longer in their length than whichever of the open end 216a, the open end 218a and the open end 220a.

Referring to Fig. 5, the valve member 194 is inserted into the hollow portion 180 and the hollow portion 182. More specifically, the second portion 202 is inserted into the hollow portion 180 whereas the first portion 200 and the third portion 204 are inserted into the hollow portion 182. The oil path 206 has an open end 206a inside the oil path 184. Thus, the oil path 184 and the oil path 206 communicate with each other. The first portion 200 has a diameter which is smaller than that of the hollow portion 182 only slightly so that there will be little gap between the outer circumferential surface 200a (see Fig. 7) of the first portion 200 and the cover member 46b. The second portion 202 has a smaller diameter than that of the hollow portion 180 whereas the third portion 204 has a smaller diameter than that of the hollow portion 182. The second portion 202 is povitably supported by the casing 46 (the casing main body 46a) via a support member 226 whereas the third portion 204 is pivotably supported by the casing 46 (the cover member 46b) via a support member 228. Thus, the valve member 194 is supported pivotably in the casing 46. In the present embodiment, the support member 226 and the support member 228 each include oil seals.

The coupling portion 198 is where a motor (not illustrated) is coupled via a coupling mechanism (not illustrated). The motor is controlled by a controller (not illustrated) based on throttle opening angle or motorcycle speed for example. Thus, the valve member 194 is pivoted, and the oil path 184 is selectively brought into communication with the oil path 88, the oil path 136 or the oil path 138 via the relevant oil path 206, the oil path 210, the oil path 212 or the oil path 214. As a result, the oil is selectively introduced into the oil path 88, the oil path 136 or the oil path 138, to supply the oil to the clutch portion C2, the clutch portion C3 or the clutch portion C4 selectively. This selectively engages/disengages the clutch portion C2, the clutch portion C3 and the clutch portion C4. Specifically, the transmission apparatus 44 is shifted to an appropriate gear position according to the state of travel of the scooter 10.

Hereinafter, detailed description will be made for oil supply paths to the clutch portions C2, C3, C4 when the gear position is shifted from the 1st-speed through the 4th-speed in the transmission apparatus 44.

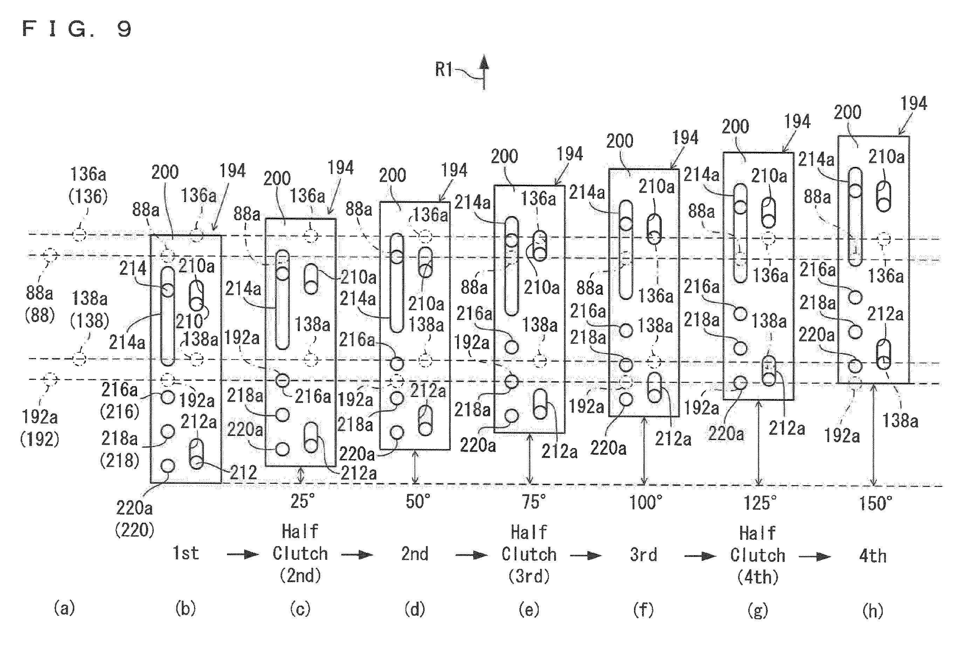

Fig. 9 shows a relationship between the valve member 194 and the open end 88a of the oil path 88, the open end 136a of the oil path 136, the open end 138a of the oil path 138 and the open end 192a of the oil path 192. In order to avoid complication in the drawing, only the first portion 200 is shown as the valve member 194 in Fig. 9. Also, the first portion 200 is shown as a development view. Fig. 9(a) shows positional relationship between the open end 88a, the open end 136a, the open end 138a and the open end 192a. Figs. 9(b) through 9(h) show relationships between the valve member 194 and the open ends 88a, 136a, 138a, 192a as the gear position is changed from the 1st-speed to the 4th-speed in the transmission apparatus 44.

In the following description, a state where the oil path 210 has its open end 210a closed by the casing 46 (the state shown in Fig. 6(a) for example) will be expressed that the oil path 210 is closed. Likewise, a state where the open end 212a, the open end 214a, the open end 216a, the open end 218a or the open end 220a is closed by the casing 46 (the state shown in Fig. 6(a) and Fig. 6(b) for example) will be expressed respectively that the oil path 212, the oil path 214, the oil path 216, the oil path 218 or the oil path 220 is closed.

Referring to Fig. 6 and Fig. 9, when the transmission apparatus 44 is in the 1st-speed gear position, the oil paths 210, 212, 214, 216, 218, 220 are all closed. In this case, oil flow from the oil path 184 (see Fig. 5) to the oil path 88, the oil path 136 and the oil path 138 is blocked by the valve member 194. Therefore, oil is not supplied to the clutch portion C2, the clutch portion C3 or the clutch portion C4, and therefore none of the clutch portion C2, the clutch portion C3 and the clutch portion C4 are engaged. In the following description, an oil pressure inside the oil path 184 and the valve member 194 when the transmission apparatus 44 is in the 1st-speed gear position will be called a first pressure. The first pressure is subject to slight changes depending on environmental conditions (such as oil temperature).

From a state shown in Fig. 9(b), (in which the transmission apparatus 44 is in the 1st-speed gear position) the valve member 194 pivots in a first direction R1 by 25°, whereby a state in Fig. 9(c) is achieved, i.e., the open end 214a comes into alignment with the open end 88a while the open end 216a comes into alignment with the open end 192a, radially of the first portion 200. Specifically, the oil path 214 is open to the oil path 88 whereas the oil path 216 is open to the oil path 192. Thus, the oil path 214 and the oil path 88 communicate with each other, and the oil path 216 and the oil path 192 communicate with each other. Therefore, oil in the oil path 184 (see Fig. 5) flows through the oil path 206 and the oil path 214 to the oil path 88, and then flows through the oil path 206 and the oil path 216 to the oil path 192.

Referring now to Fig. 5, oil pressure in the oil path 192 is adjusted by the relief valve 193. More specifically, the relief valve 193 adjusts the oil pressure in the oil path 192 to a second pressure which is lower than the first pressure. The second pressure is subject to slight changes depending on environmental conditions (such as oil temperature). Also, the second pressure has a value greater than zero. When the valve member 194 is in the state shown in Fig. 9(c), the oil path 192 and the oil path 88 communicate with each other via the oil path 216, the oil path 206 (see Fig. 5) and the oil path 214. Therefore, oil which comes through the oil path 88 to the clutch portion C2 has the second pressure which is lower than the first pressure. In the present embodiment, the clutch portion C2 comes into engagement when the supplied oil has the first pressure while the clutch portion C2 is half-engaged when the supplied oil has the second pressure. Therefore, when the valve member 194 is in the state shown in Fig. 9(c), the clutch portion C2 is in a half-clutch state. Likewise, in the present embodiment, the clutch portion C3 and the clutch portion C4 come into engagement when the oil supplied thereto has the first pressure while they are half-engaged when the supplied oil has the second pressure.

Next, when the valve member 194 is pivoted from the state in Fig. 9(c) in the first direction R1 by 25°, a state shown in Fig. 9(d) is achieved, where the oil path 214 (the open end 214a) stays opened to the oil path 88 (the open end 88a) but the oil path 216 (the open end 216a) is closed. Thus, the oil flow from the oil path 216 to the oil path 192 (see Fig. 5) and to the relief valve 193 (see Fig. 5) is blocked, and the pressure of oil introduced into the clutch portion C2 increases to the first pressure. As a result, the clutch portion C2 is completely engaged, and the gear shift to the 2nd-speed gear position in the transmission apparatus 44 is completed.

It should be noted here that when the valve member 194 is in the state shown in Fig. 9(b) or Fig. 9(c), the oil path 210 and the oil path 212 are closed. In this case, as understood from Fig. 5, oil flow from the oil path 184 to the oil path 136 and to the oil path 138 is blocked by the valve member 194. Therefore, oil is not supplied to the clutch portion C3 or the clutch portion C4, and therefore none of the clutch portion C3 and the clutch portion C4 is engaged.

Next, when the valve member 194 is pivoted from the state shown in Fig. 9(d) in the first direction R1 by 25°, a state shown in Fig. 9(e) is achieved, where the open end 210a comes into alignment with the open end 136a while the open end 218a comes into alignment with the open end 192a, radially of the first portion 200. Specifically, the oil path 210 is open to the oil path 136 whereas the oil path 218 is open to the oil path 192. Under this state, the oil path 214 (the open end 214a) stays open to the oil path 88 (the open end 88a). Therefore, the oil path 210 and the oil path 136 communicate with each other; the oil path 214 and the oil path 88 communicate with each other; and the oil path 218 and the oil path 192 communicate with each other. Thus, oil from the oil path 184 (see Fig. 5) flows through the oil path 206 (see Fig. 5) and the oil path 214, to the oil path 88, then flows through the oil path 206 and the oil path 210, to the oil path 136, and then flows through the oil path 206 and the oil path 218, to the oil path 192.

As mentioned earlier, oil pressure in the oil path 192 is adjusted by the relief valve 193 to the second pressure. Also, the oil path 192 and the oil path 88 communicate with each other via the oil path 218, the oil path 206 (see Fig. 5) and the oil path 214. Further, the oil path 192 and the oil path 136 communicate with each other via the oil path 218, the oil path 206 and the oil path 210. Therefore, the oil from the oil path 88 to the clutch portion C2 (see Fig. 5), and the oil from the oil path 136 to the clutch portion C3 (see Fig. 5) have the second pressure. Thus, the clutch portion C2 and the clutch portion C3 are both at a half-clutch state.

Next, when the valve member 194 is pivoted from the state in Fig. 9(e) in the first direction R1 by 25°, a state shown in Fig. 9(f) is achieved, where the oil path 214 (the open end 214a) stays opened to the oil path 88 (the open end 88a); the oil path 210 (the open end 210a) stays opened to the oil path 136 (the open end 136a); but the oil path 218 (the open end 218a) is closed. Thus, the oil flow from the oil path 218 to the oil path 192 (see Fig. 5) and to the relief valve 193 (see Fig. 5) is blocked, and the pressure of oil introduced into the clutch portion C2 and the clutch portion C3 increases to the first pressure. As a result, the clutch portion C2 and the clutch portion C3 are completely engaged, and the gear shift to the 3rd-speed gear position in the transmission apparatus 44 is completed.

It should be noted here that when the valve member 194 is in the state shown in Fig. 9(e) or Fig. 9(f), the oil path 212 is closed. In this case, as understood from Fig. 5, oil flow from the oil path 184 to the oil path 138 is blocked by the valve member 194. Therefore, oil is not supplied to the clutch portion C4, and so the clutch portion C4 is not engaged.

Next, when the valve member 194 is pivoted from the state shown in Fig. 9(f) in the first direction R1 by 25°, a state shown in Fig. 9(g) is achieved, where the open end 212a comes into alignment with the open end 138a while the open end 220a comes into alignment with the open end 192a, radially of the first portion 200. Specifically, the oil path 212 is open to the oil path 138 whereas the oil path 220 is open to the oil path 192. Under this state, the oil path 214 stays open to the oil path 88, but the oil path 210 (the open end 210a) is closed. Therefore, when the valve member 194 is in the state in Fig. 9(g), the oil path 212 and the oil path 138 communicate with each other; the oil path 214 and the oil path 88 communicate with each other; and the oil path 220 and the oil path 192 communicate with each other. On the other hand, the oil path 210 and the oil path 136 do not communicate with each other. Thus, oil from the oil path 184 (see Fig. 5) flows through the oil path 206 (see Fig. 5) and the oil path 214, to the oil path 88, then flows through the oil path 206 and the oil path 212, to the oil path 138, and then flows through the oil path 206 and the oil path 220, to the oil path 192. Also, oil flow from the oil path 184 (see Fig. 5) to the oil path 136 is blocked by the valve member 194.

As mentioned earlier, oil pressure in the oil path 192 is adjusted by the relief valve 193 to the second pressure. Also, the oil path 192 and the oil path 88 communicate with each other via the oil path 220, the oil path 206 (see Fig. 5) and the oil path 214. Further, the oil path 192 and the oil path 138 communicate with each other via the oil path 220, the oil path 206 and the oil path 212. Therefore, the oil from the oil path 88 to the clutch portion C2 (see Fig. 5), and the oil from the oil path 138 to the clutch portion C4 (see Fig. 5) have the second pressure. Thus, the clutch portion C2 and the clutch portion C4 are both at a half-clutch state. It should be noted here that since an oil flow from the oil path 184 (Fig. 5) to the oil path 136 is blocked by the valve member 194, oil is not supplied to the clutch portion C3. Therefore, the clutch portion C3 is disengaged.

Next, when the valve member 194 is pivoted from the state in Fig. 9(g) in the first direction R1 by 25°, a state shown in Fig. 9(h) is achieved, where the oil path 214 (the open end 214a) stays opened to the oil path 88 (the open end 88a); the oil path 212 (the open end 212a) stays opened to the oil path 138 (the open end 138a); but the oil path 220 (the open end 220a) is closed. Thus, the oil flow from the oil path 220 to the oil path 192 (see Fig. 5) and to the relief valve 193 (see Fig. 5) is blocked, and the pressure of oil flowing into the clutch portion C2 and the clutch portion C4 increases to the first pressure. As a result, the clutch portion C2 and the clutch portion C4 are completely engaged, and the gear shift to the 4th-speed gear position in the transmission apparatus 44 is completed.

The above-described relationships between the valve member 194 and the clutch portions C1, C2, C3, C4 (relationships between open/close state of the oil paths 210, 212, 214, 216, 218, 220 and the engaged/disengaged state of the clutch portions C1, C2, C3, C4) are summarized in Table 1. In Table 1, a symbol "×" indicates that the valve member 194 has its oil path closed whereas a symbol "o" indicates that the valve member 194 has its oil path opened. Also, a symbol "C" indicates that the clutch portion is engaged; a symbol " HC" indicates that the clutch portion is in a half-clutch state; and a symbol "NC" indicates that the clutch portion is disengaged.

**[Table 1]**

| Relationship between Valve Member and Clutch Portions at Each Gear Position | | | | | | | | |
|---|---|---|---|---|---|---|---|---|
| | | Gear Position | | | | | | |
| | | 1st | Half Clutch (2nd) | 2nd | Half Clutch (3rd) | 3rd | Half Clutch (4th) | 4th |
| V A L V E M E M B E R | Oil Path 214 (for 2nd) | × | ○ | ○ | ○ | ○ | ○ | ○ |
| | Oil Path 210 (for 3rd) | × | × | × | ○ | ○ | × | × |
| | Oil Path 212 (for 4th) | × | × | × | × | × | ○ | ○ |
| | Oil Path 216 (for HC) | × | ○ | × | × | × | × | × |
| | Oil Path 218 (for HC) | × | × | × | ○ | × | × | × |
| | Oil Path 220 (for HC) | × | × | × | × | × | ○ | × |
| Clutch Portion C1 (for 1st) | | C | C | C | C | C | C | C |
| Clutch Portion C2 (for 2nd) | | NC | HC | C | HC | C | HC | C |
| Clutch Portion C3 (for 3rd) | | NC | NC | NC | HC | C | NC | NC |
| Clutch Portion C4 (for 4th) | | NC | NC | NC | NC | NC | HC | C |

Referring to Table 1, it is possible, in the present embodiment as has been described above, to selectively open/close the oil path 214, the oil path 210 and the oil path 212 by pivoting the valve member 194. The arrangement enables selective engagement/disengagement of the clutch portion C2, the clutch portion C3 and the clutch portion C4, making it possible to make shift changes between different gear positions in the transmission apparatus 44.

Also, when the gear position is changed from the 1st-speed to the 2nd-speed position in the transmission apparatus 44, the oil path 216 is opened to the oil path 192 (see Fig. 5), whereby the arrangement makes it possible to bring the clutch portion C2 into a half-clutch state. Likewise, when the gear position is changed from the 2nd-speed to the 3rd-speed position in the transmission apparatus 44, the oil path 218 is opened to the oil path 192, whereby the arrangement makes it possible to bring the clutch portion C2 and the clutch portion C3 into a half-clutch state. Also, when the gear position is changed from the 3rd-speed to the 4th-speed position in the transmission apparatus 44, the oil path 220 is opened to the oil path 192, whereby the arrangement makes it possible to bring the clutch portion C2 and the clutch portion C4 into a half-clutch state. These enable smooth shifting between gear positions in the transmission apparatus 44.

In the present embodiment, the following positions represent the first pivoting position, the second pivoting position and the third pivoting position, with a reference position provided by the position of the valve member 194 (position shown in Fig. 9(b)) in the 1st-speed gear position in the transmission apparatus 44: Specifically, the first pivoting position is a position of the valve member 194 (see Fig. 9(f)) when it is pivoted from the reference position by the first angle (100°); the second pivoting position is a position of the valve member 194 (see Fig. 9(h)) when it is pivoted from the reference position by the second angle (150°); and the third pivoting position is a position of the valve member 194 (see Fig. 9(d)) when it is pivoted from the reference position by the third angle (50°).

In the configuration described as the above, the transmission apparatus 44 has the oil path 210 which is for supplying oil to the clutch portion C3, and the oil path 212 which is for supplying oil to the clutch portion C4, formed on the first hypothetical plane 222 which is vertical to the pivot axis 194a of the valve member 194. In this case, it is possible to shorten the length (a dimension parallel to the pivot axis 194a) of the valve member 194 in comparison to cases where two oil paths for supplying oil to the clutch portions C3, C4 are formed side by side to each other in a parallel direction to the pivot axis of the valve member. Also, in the transmission apparatus 44, the oil path 206 extends in parallel to the pivot axis 194a of the valve member 194 and opens in this parallel direction, whereas the oil path 210 and the oil path 212 extend vertically to the pivot axis 194a and open in this vertical direction. In this case, the opening portion (open end 206a) which is arranged to introduce oil into the valve member 194 in order to supply the oil to the clutch portion C3 and the clutch portion C4 is not disposed side by side in the same direction as the opening portions (the open end 210a and the open end 212a) which is arranged to send oil from inside the valve member 194 to the clutch portion C3 and the clutch portion C4. More specifically, the open ends 206a, 210a, 212a are not laid side by side in the direction which is in parallel to the pivot axis 194a of the valve member 194, nor the open ends 206a, 210a, 212a are laid side by side in the direction vertical to the pivot axis 194a. This makes it possible to make the valve member 194 in a small size in the parallel direction to the pivot axis 194a, and to make the valve member 194 in a small size in the direction vertical to the pivot axis 194a. Specifically, it is possible to reduce an axial length of the valve member 194 and a thickness of the valve member 194 (radial dimension of the valve member 194). As a result, it is possible to make the transmission apparatus 44 in a compact size.

Also, in the transmission apparatus 44, the oil path 206 is formed on the pivot axis 194a of the valve member 194 and opened on the pivot axis 194a. In this case, it is possible to easily form the oil path 206, and to smoothly introduce oil from the oil path 184 to the oil path 206.

Also, in the transmission apparatus 44, the oil path 214, the oil path 216, the oil path 218 and the oil path 220 are formed on the second plane 224 at a distance from the first plane 222. In this case, the arrangement makes it possible to avoid situations where the oil path 210, the oil path 212, the oil path 214, the oil path 216, the oil path 218 and the oil path 220 are laid too closely to each other. Thus, it becomes possible to simplify the construction of the valve member 194.

In the embodiment described above, the valve member 194 is pivoted by a motor which is controlled by a controller. However, the valve member 194 may be pivoted according to an operation by the rider. In this case, the rider will operate a shift lever or a shift pedal, which is coupled to the coupling portion 198 of the valve member 194 via a coupling mechanism.

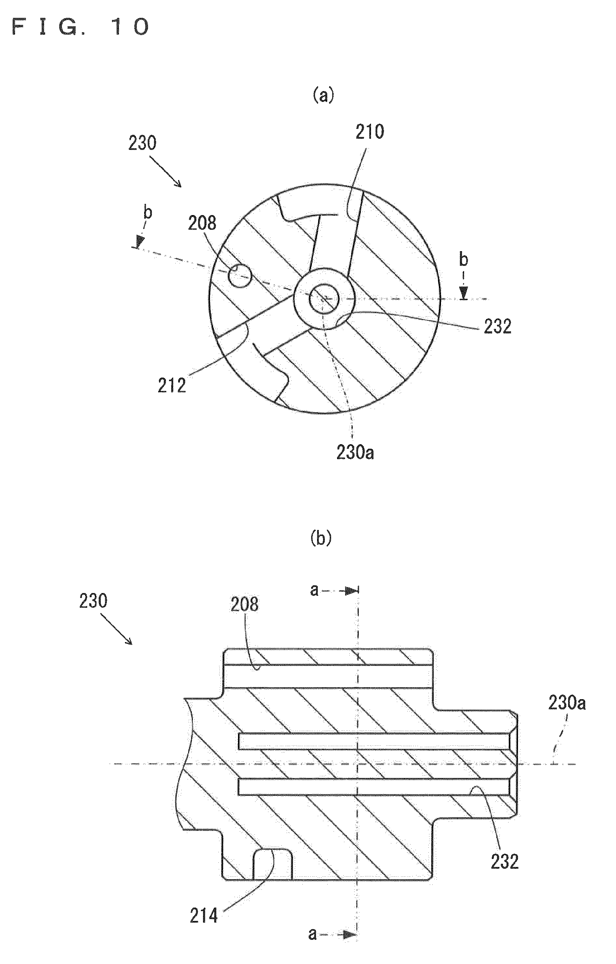

In the embodiment described above, the oil path 206 arranged to introduce oil into the valve member 194 is formed on the pivot axis 194a of the valve member 194. However, it is not necessary that an oil path for introducing oil into the valve member is formed on the pivot axis of the valve member. For example, a valve member 230 shown in Fig. 10 includes an oil path 232 which has an annular section and extends in parallel to the pivot axis 230a. Fig. 10(a) is a sectional view taken in lines a-a in Fig. 10(b) whereas Fig. 10(b) is a sectional view taken in lines b-b in Fig. 10(a). The valve member 230 in Fig. 10 also differs from the above-mentioned valve member 194 in that the oil path 206 is replaced by an oil path 232. Except for the oil path 232, the valve member 230 has the same construction as the valve member 194.

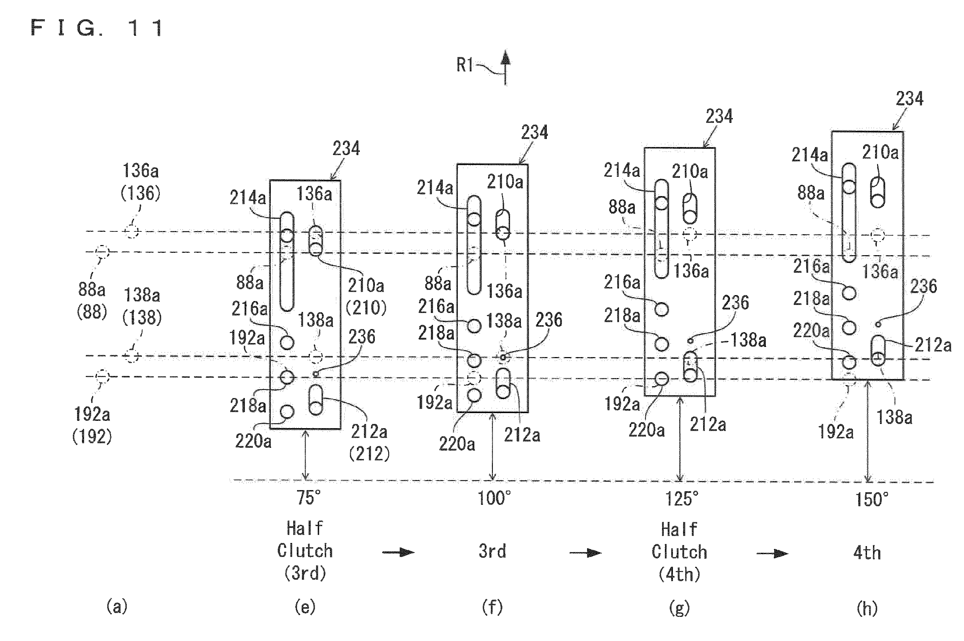

In the embodiment described above, one oil path, i.e., the oil path 212, is provided in the valve member 194 as an oil path for supplying oil to the clutch portion C4. However, the number of oil paths provided in the valve member for supplying oil to the clutch portion C4 is not limited to one. For example, like a valve member 234 shown in Fig. 11, one more oil path, i.e., an oil path 236 may be provided in order to supply oil to the clutch portion C4.

Fig. 11 shows a relationship between the valve member 234 and the open ends 88a, 136a, 138a, 192a in a case where the above-described transmission apparatus 44 includes the valve member 234 in place of the valve member 194. The valve member 234 has the same construction as the valve member 194 except for the oil path 236. Therefore, any other description of the valve member 234 than the oil path 236 will not be made here. Also, oil from the valve member 234 is supplied to the clutch portion C2 and the clutch portion C3 by the same method and the same route as the method and the route by which the oil is supplied from the valve member 194 to the clutch portion C2 and the clutch portion C3. Therefore, the method and the route by which the oil is supplied to the clutch portion C2 and the clutch portion C3 will not be described here. Also, a relationship between the valve member 234 and the open ends 88a, 136a, 138a, 192a at the time of gear shift from the 1st-speed to the 2nd-speed gear position and at the time when the clutch portion C3 is brought into a half-clutch state in the transmission apparatus is the same as the relationship between the valve member 194 and the open ends 88a, 136a, 138a, 192a as already described with reference to Fig. 9. Therefore, description will not be repeated for the valve member 234 as to the gear shift from the 1st-speed to the 2nd-speed gear position, or the shift when the clutch portion C3 is brought to a half-clutch state in the transmission apparatus.

Referring to Fig. 11, the oil path 236 is on the first plane 222 (see Fig. 8) like the oil path 210 and the oil path 212. Like the oil paths 216, 218, 220 (see Fig. 6), the oil path 236 extends from the oil path 206 (see Fig. 6) in a direction vertical to the pivot axis 194a, and opens on an outer circumferential surface of the valve member 234. Also, the oil path 236 is open to the oil path 138 when the transmission apparatus is set to the 3rd-speed gear position. Also, the oil path 236 is formed so that the amount of oil flowing through the oil path 236 is less than the amount of oil flowing through the oil path 212.

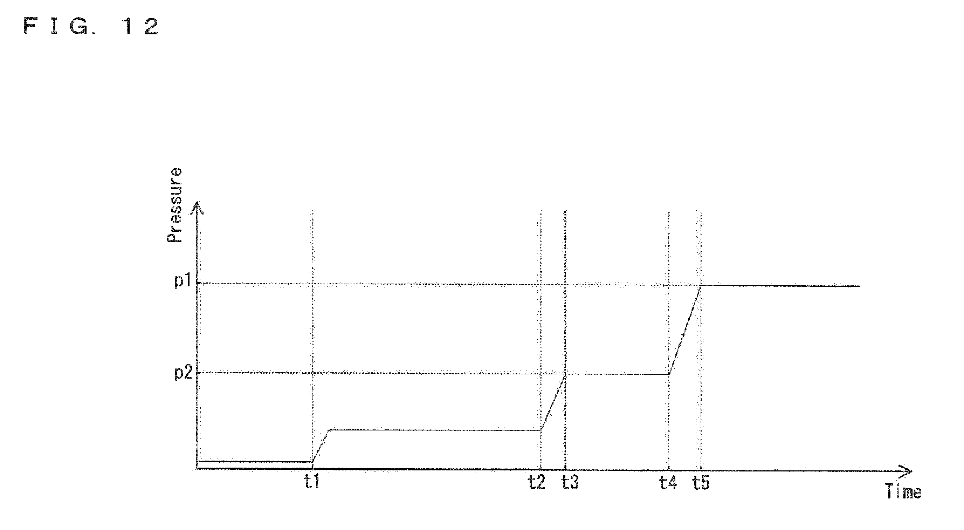

Fig. 12 shows oil pressure change in the oil chamber 120d of the clutch portion C4 (see Fig. 5). In Fig. 12, pressure p1 is the first pressure described so far whereas pressure p2 is the second pressure described so far. Time Point t1 represents a time point at which the valve member 234, which was in a state shown in Fig. 11(e), has attained a state shown in Fig. 11(f); Time Point t2 represents a time point at which the valve member 234, which was in a state shown in Fig. 11(f), has attained a state shown in Fig. 11(g); and Time Point t3 represents a time point at which oil pressure in the oil chamber 120d has attained the second pressure p2. Also, Time Point t4 represents a time point at which the valve member 234, which was in a state shown in Fig. 11(g), has attained a state shown in Fig. 11(h) whereas Time Point t5 represents a time point at which oil pressure in the oil chamber 120d has attained the first pressure p1.

In the transmission apparatus which includes the valve member 234, when the valve member 234 is in a state shown in Fig. 11(e), (i.e., when the clutch portion C3 is half-engaged), the open end of the oil path 236 and the open end 212a of the oil path 212 are closed by the casing 46 (see Fig. 5). Therefore, oil is not supplied to the clutch portion C4 when the clutch portion C3 is in a half-clutch state, like in the transmission apparatus 44 which includes the valve member 194.

Next, as the valve member 234 pivots from the state shown in Fig. 11(e) in the first direction R1 by 25°, the transmission apparatus is set to the 3rd-speed gear position. In this process, as shown in Fig. 11(f), the open end of the oil path 236 comes into alignment with the open end 138a radially of the valve member 234, opening the oil path 236 to the oil path 138. Thus, oil in the oil path 236 is supplied, through the oil path 138 to the oil chamber 120d. As a result, as understood from Fig. 12, oil pressure in the oil chamber 120d starts to increase at Time Point t1. It should be noted here that in the present embodiment, the amount of oil flowing through the oil path 236 is small. Also, as has been mentioned earlier, part of the oil in the oil chamber 120d is discharged from the leak hole 120f (see Fig. 5). Therefore, although there is oil supply from the oil path 236 to the oil chamber 120d, oil pressure in the oil chamber 120d does not reach the second pressure p2. Also, as has been described earlier, the pressure plate 120b (see Fig. 5) is urged leftward (in a direction in which the friction discs 122 and the clutch discs 124 moves away from each other) by the urging members 121a (see Fig. 5). Therefore, although there is oil supply from the oil path 236 to the oil chamber 120d, the clutch portion C4 stays disengaged.

Next, when the valve member 234 is pivoted from the state shown in Fig. 11(f) in the first direction R1 by 25°, a state shown in Fig. 11(g) is achieved, where the open end 212a comes into alignment with the open end 138a while the open end 220a comes into alignment with the open end 192a, radially of the valve member 234. Specifically, the oil path 212 is open to the oil path 138 whereas the oil path 220 is open to the oil path 192. Thus, oil which is adjusted to the second pressure p2 by the relief valve 193 (see Fig. 5) is supplied from the oil path 212 to the oil chamber 120d via the oil path 138. As a result, as shown in Fig. 12, oil pressure in the oil chamber 120d starts to increase at Time Point t2, and attains the second pressure p2 at Time Point t3. This brings the clutch portion C4 into a half-clutch state. At this point, the open end of the oil path 236 is blocked by the casing 46.

Thereafter, as the valve member 234 is pivoted from the state in Fig. 11(g) in the first direction R1 by 25°, a state shown in Fig. 11(h) is achieved, where the oil path 212 (the open end 212a) stays opened to the oil path 138 (the open end 138a) but the oil path 220 (the open end 220a) is closed. Thus, the oil flow from the valve member 234 to the oil path 192 (see Fig. 5) and to the relief valve 193 (see Fig. 5) is blocked, and the pressure of oil supplied from the oil path 212 to the oil chamber 120d increases. As a result, as shown in Fig. 12, oil pressure in the oil chamber 120d starts to increase at Time Point t4, and attains the first pressure p1 at Time Point t5. This brings the clutch portion C4 into complete engagement.

As described earlier, in the transmission apparatus which includes the valve member 234, oil is being supplied to the oil chamber 120d of the clutch portion C4 while the gear position is in the 3rd-speed, i.e., oil is supplied preliminarily before a shifting operation to the 4th-speed gear position is started. The arrangement makes it possible to shorten the time from Time Point t2 (at which the gear position shifting is started) to Time Point t3 (at which the oil pressure in the oil chamber 120d attains the second pressure p2). Specifically, the clutch portion C4 can be brought to a half-clutch state quickly. The arrangement makes it possible to eliminate a feeling of "disengaged coasting" perceived by the rider of the scooter 10 during the time when the transmission apparatus is being shifted from the 3rd-speed to the 4th-speed gear position. Also, it is possible to quickly complete a shift from the 3rd-speed to the 4th-speed gear position.

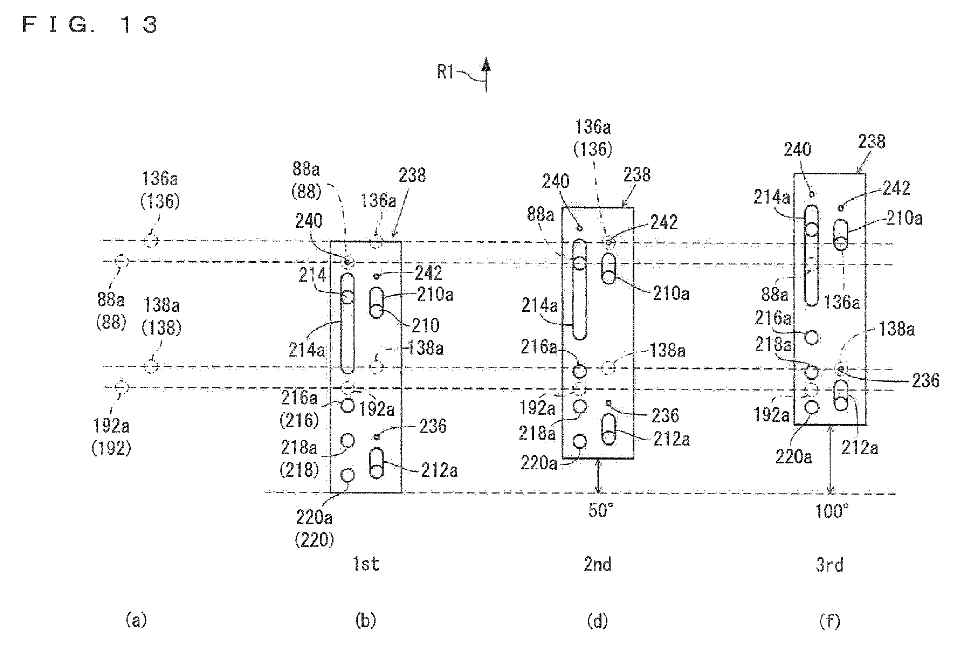

There may be additional oil paths, as in the valve member 238 in Fig. 13, including an additional oil path 240 arranged to supply oil to the clutch portion C2, and another additional oil path 242 arranged to supply oil to the clutch portion C3. In the valve member 238, the oil path 240 is on the second plane 224 (see Fig. 8) whereas the oil path 242 is on the first plane 222 (see Fig. 8). Like the oil path 236 (see Fig. 11), the oil paths 240, 242 extend from the oil path 206 (see Fig. 6) in a direction vertical to the pivot axis 194a, and opens on an outer circumferential surface of the valve member 238. Also, the oil path 240 is open to the oil path 88 when the transmission apparatus is in the 1st-speed gear position (see Fig. 13 (b)) whereas oil path 242 is open to the oil path 136 when the transmission apparatus is in the 2nd-speed gear position (see Fig. 13 (d)). Also, the oil path 240 is made so that the amount of oil flowing through the oil path 240 is smaller than the amount of oil flowing through the oil path 214. The oil path 242 is made so that amount of oil flowing through the oil path 242 is smaller than the amount of oil flowing through the oil path 210.

In the transmission apparatus which includes the valve member 238, it is possible to make a preliminary supply of oil from the oil path 240 to the oil chamber 77c (see Fig. 2) of the clutch portion C2 (see Fig. 2) while the gear position is in the 1st-speed gear position. This makes it possible to quickly bring the clutch portion C2 to the half-clutch state. Also, it is possible to make a preliminary supply of oil from the oil path 242 to the oil chamber 120e (see Fig. 5) of the clutch portion C3 (see Fig. 5) while the gear position is in the 2nd-speed gear position. This makes it possible to quickly bring the clutch portion C3 to the half-clutch state.

In the embodiment described above, description was made for a case where the present invention is applied to a transmission apparatus which includes the clutch portions C2, C3, C4 that are arranged to make engagement when oil is supplied. However, the present invention is applicable also to transmission apparatuses which include clutch portions that are arranged to make disengagement when oil is supplied.

In the embodiment described above, description was made for a case where the present invention is applied to a transmission apparatus which makes use of a centrifugal clutch portion C1 for the 1st-speed gear position. However, the present invention is applicable also to a transmission apparatus which makes use of a hydraulic clutch portion for the 1st-speed gear position.

In the embodiment described above, description was made for a case where the present invention is applied to a transmission apparatus which has four speed gear positions. However, the present invention is also applicable to a transmission apparatus which has two speed gear positions, three speed gear positions or five or a greater number of speed gear positions.

In the embodiment described above, the oil path 210 is centered on the first plane 222 in a direction in parallel to the pivot axis 194a, and the oil path 212 is also centered on the first plane 222 in a direction in parallel to the pivot axis 194a. However, locations of the oil paths 210, 212 are not limited to the above-mentioned example. For example, as far as the oil paths 210, 212 cross with the first plane 222, there may be an arrangement where the center of the oil path 210 is off the first plane 222 in one of the directions parallel to the pivot axis of the valve member and the center of the oil path 212 is off the first plane 222 in the other of the directions. Specifically, the oil path 210 and the oil path 212 may be out of aligned with each other in the direction parallel to the valve member's pivot axis. Likewise, as far as the oil paths 214, 216, 218, 220 cross with the second plane 224, any one of the oil paths 214, 216, 218, 220 may be out of alignment with the other oil paths in a parallel to the valve member's pivot axis.

In the embodiment described above, the oil path 210 arranged to supply oil to the clutch portion C3 for the 3rd-speed gear position, and the oil path 212 arranged to supply oil to the clutch portion C4 for the 4th-speed gear position are formed on the first plane 222 whereas the oil path 214 arranged to supply oil to the clutch portion C2 for the 2nd-speed gear position is formed on the second plane 224. However, locations of the oil paths are not limited to the above-mentioned example. For example, there may be an arrangement where the oil path arranged to supply oil to the clutch portion for the 2nd-speed gear position, and the oil path arranged to supply oil to the clutch portion for the 3rd-speed gear position are formed on the first plane 222 while the oil path arranged to supply oil to the clutch portion for the 4th-speed gear position is formed on the second plane 224. In this case, the clutch portion for the 2nd-speed gear position represents the first hydraulic clutch portion; the clutch portion for the 3rd-speed gear position represents the second hydraulic clutch portion; and the clutch portion for the 4th-speed gear position represents the third hydraulic clutch portion. Also, for example, there may be an arrangement where the oil path arranged to supply oil to the clutch portion for the 2nd-speed gear position, and the oil path arranged to supply oil to the clutch portion for the 4th-speed gear position are formed on the first plane 222 while the oil path arranged to supply oil to the clutch portion for the 3rd-speed gear position is formed on the second plane 224. In this case, the clutch portion for the 2nd-speed gear position represents the first clutch portion; the clutch portion for the 4th-speed gear position represents the second clutch portion; and the clutch portion for the 3rd-speed gear position represents the third clutch portion.

In the embodiment described above, description was made for a case where a transmission apparatus according to the present invention is applied to a scooter 10. However, the saddle type vehicle to which the transmission apparatus according to the present invention is applicable is not limited to the scooter 10. Specifically, the transmission apparatus according to the present invention is applicable to other kinds of saddle type vehicles including other types of motorcycles such as mopeds; all-terrain vehicles; snowmobiles; and others.

The present invention being thus far described in terms of preferred embodiments, it is obvious that these may be varied in many ways within the scope and the spirit of the present invention. The scope of the present invention is only limited by the accompanied claims.

### LEGEND

- 10: Scooter
- 30: Engine unit
- 36: Output shaft
- 42: Engine
- 44: Transmission apparatus
- 46: Casing
- 88, 136, 138, 184, 192, 206, 208, 210, 212, 214, 216, 218, 220, 232, 236, 240, 242: Oil paths
- 190: Oil pan
- 194, 230, 234, 238: Valve members
- 194a, 230a: Pivot axes
- 222: First hypothetical plane
- 224: Second hypothetical plane
- C1, C2, C3, C4: Clutch portions

## Claims

1. A transmission apparatus (44) having at least a first hydraulic clutch portion (C3) and a second hydraulic clutch portion (C4), comprising:
a first oil path (136) arranged to introduce oil to the first hydraulic clutch portion (C3);
a second oil path (138) arranged to introduce oil to the second hydraulic clutch portion (C4);
a third oil path (184) for introducing oil from an oil source (190); and
a valve member (194, 230, 234, 238) provided pivotably between the first oil path (136), the second oil path (138) and the third oil path (184), settably to a first pivoting position and a second pivoting position;
**characterized in that**
the valve member (194, 230, 234, 238) includes a fourth oil path (206, 232) extending through the valve member (194, 230, 234, 238) in parallel to the valve member's pivot axis (194a, 230a) and opening in said parallel direction to communicate with the third oil path (184), and a fifth and a sixth oil paths (210, 212) each extending from the fourth oil path (206, 232) in a direction vertical to the pivot axis (194a, 230a) and opening in said vertical direction;
the fifth oil path (210) and the sixth oil path (212) are on a first hypothetical plane (222) vertical to the pivot axis (194a, 230a); and
the first oil path (136) and the fifth oil path (210) communicate with each other when the valve member (194, 230, 234, 238) is at the first pivoting position, whereas the second oil path (138) and the sixth oil path (212) communicate with each other when the valve member (194, 230, 234, 238) is at the second pivoting position.

2. The transmission apparatus (44) according to Claim 1, wherein the fourth oil path (206) is on the pivot axis (194a) of the valve member (194) and is open on the pivot axis (194a).

3. The transmission apparatus (44) according to Claim 1 or 2, further comprising: a third hydraulic clutch portion (C2); and a seventh oil path (88) arranged to introduce oil to the third hydraulic clutch portion (C2); wherein
the valve member (194, 230, 234, 238) is pivotable between the first oil path (136), the second oil path (138), the third oil path (184) and the seventh oil path (88); is settable to a third pivoting position; and further includes an eighth oil path (214) extending from the fourth oil path (206, 232) in a direction vertical to the pivot axis (194a, 230a) and opening in said vertical direction;
the eighth oil path (214) is on a second hypothetical plane (224) vertical to the pivot axis (194a, 230a);
the second hypothetical plane (224) is at a distance from the first hypothetical plane (222) in a direction parallel to the pivot axis (194a, 230a); and
the seventh oil path (88) and the eighth oil path (214) communicate with each other when the valve member (194, 230, 234, 238) is at the third pivoting position.

4. A saddle type vehicle (10) comprising the transmission apparatus (44) according to one of Claims 1 through 3.

## Patentansprüche

1. Eine Übertragungsvorrichtung (44) mit zumindest einem ersten Hydraulikkupplungsabschnitt (C3) und einem zweiten Hydraulikkupplungsabschnitt (C4), die folgende Merkmale aufweist:
einen ersten Ölweg (136), der angeordnet ist, um Öl in den ersten Hydraulikkupplungsabschnitt (C3) einzuführen;
einen zweiten Ölweg (138), der angeordnet ist, um Öl in den zweiten Hydraulikkupplungsabschnitt (C4) einzuführen;
einen dritten Ölweg (184) zum Einführen von Öl von einer Ölquelle (190); und
ein Ventilbauglied (194, 230, 234, 238), das schwenkbar zwischen dem ersten Ölweg (136), dem zweiten Ölweg (138) und dem dritten Ölweg (184) vorgesehen ist, einstellbar auf eine erste Schwenkposition und eine zweite Schwenkposition;
**dadurch gekennzeichnet dass**,
das Ventilbauglied (194, 230, 234, 238) einen vierten Ölweg (206, 232) umfasst, der sich durch das Ventilbauglied (194, 230, 234, 238) parallel zu der Ventilbaugliedschwenkachse (194a, 230a) erstreckt, und sich in der Parallelrichtung öffnet, um mit dem dritten Ölweg (184) zu kommunizieren, und einen fünften und sechsten Ölweg (210, 212), die sich jeweils von dem vierten Ölweg (206, 232) in einer Richtung vertikal zu der Schwenkachse (194a, 230a) erstrecken und in der Vertikalrichtung öffnen;
der fünfte Ölweg (210) und der sechste Ölweg (212) auf einer ersten hypothetischen Ebene (222) vertikal zu der Schwenkachse (194a, 230a) liegen; und
der erste Ölweg (136) und der fünfte Ölweg (210) miteinander kommunizieren, wenn das Ventilbauglied (194, 230, 234, 238) an der ersten Schwenkposition ist, während der zweite Ölweg (138) und der sechste Ölweg (212) miteinander kommunizieren, wenn das Ventilbauglied (194, 230, 234, 238) an der zweiten Schwenkposition ist.

2. Die Übertragungsvorrichtung (44) gemäß Anspruch 1, bei der der vierte Ölweg (206) auf der Schwenkachse (194a) des Ventilbauglieds (194) liegt, und auf der Schwenkachse (194a) geöffnet ist.

3. Die Übertragungsvorrichtung (44) gemäß Anspruch 1 oder 2, die ferner folgende Merkmale aufweist: einen dritten Hydraulikkupplungsabschnitt (C2); und einen siebten Ölweg (88), der angeordnet ist, um Öl in den dritten Hydraulikkupplungsabschnitt (C2) einzuführen; wobei
das Ventilbauglied (194, 230, 234, 238) schwenkbar ist zwischen dem ersten Ölweg (136), dem zweiten Ölweg (138), dem dritten Ölweg (184) und dem siebten Ölweg (88); einstellbar ist auf eine dritte Schwenkposition; und ferner einen achten Ölweg (214) umfasst, der sich von dem vierten Ölweg (206, 232) in einer Richtung vertikal zu der Schwenkachse (194a, 230a) erstreckt und in der Vertikalrichtung öffnet;
der achte Ölweg (214) auf einer zweiten hypothetischen Ebene (224) vertikal zu der Schwenkachse (194a, 230a) liegt;
die zweite hypothetische Ebene (224) in einem Abstand zu der ersten hypothetischen Ebene (222) in einer Richtung parallel zu der Schwenkachse (194a, 230a) liegt; und
der siebte Ölweg (88) und der achte Ölweg (214) miteinander kommunizieren, wenn das Ventilbauglied (194, 230, 234, 238) an der dritten Schwenkposition ist.

4. Ein Sattel-Typ-Fahrzeug (10), das die Übertragungsvorrichtung (44) gemäß einem der Ansprüche 1 bis 3 aufweist.

## Revendications

1. Appareil de transmission (44) présentant au moins une première partie d'embrayage hydraulique (C3) et une deuxième partie d'embrayage hydraulique (C4), comprenant:
un premier trajet d'huile (136) aménagé pour introduire de l'huile dans la première partie d'embrayage hydraulique (C3);
un deuxième trajet d'huile (138) aménagé pour introduire de l'huile dans la deuxième partie d'embrayage hydraulique (C4);
un troisième trajet d'huile (184) pour introduire de l'huile provenant d'une source d'huile (190); et
un élément de soupape (194, 230, 234, 238) prévu de manière pivotante entre le premier trajet d'huile (136), le deuxième trajet d'huile (138) et le troisième trajet d'huile (184), pouvant être réglé en une première position de pivotement et une deuxième position de pivotement;
**caractérisé par le fait que**
l'élément de soupape (194, 230, 234, 238) comporte un quatrième trajet d'huile (206, 232) s'étendant à travers l'élément de soupape (194, 230, 234, 238) de manière parallèle à l'axe de pivotement de l'élément de soupape (194a, 230a) et s'ouvrant dans ladite direction parallèle pour communiquer avec le troisième trajet d'huile (184), et un cinquième et un sixième trajet d'huile (210, 212) s'étendant, chacun, à partir du quatrième trajet d'huile (206, 232) dans une direction verticale par rapport à l'axe de pivotement (194a, 230a) et s'ouvrant dans ladite direction verticale;
le cinquième trajet d'huile (210) et le sixième trajet d'huile (212) se trouvent sur un premier plan hypothétique (222) vertical par rapport à l'axe de pivotement (194a, 230a); et
le premier trajet d'huile (136) et le cinquième trajet d'huile (210) communiquent l'un avec l'autre lorsque l'élément de soupape (194, 230, 234, 238) se trouve dans la première position de pivotement, tandis que le deuxième trajet d'huile (138) et le sixième trajet d'huile (212) communiquent l'un avec l'autre lorsque l'élément de soupape (194, 230, 234, 238) se trouve dans la deuxième position de pivotement.

2. Appareil de transmission (44) selon la revendication 1, dans lequel le quatrième trajet d'huile (206) se trouve sur l'axe de pivotement (194a) de l'élément de soupape (194) et est ouvert sur l'axe de pivotement (194a).

3. Appareil de transmission (44) selon la revendication 1 ou 2, comprenant par ailleurs: une troisième partie d'embrayage hydraulique (C2); et un septième trajet d'huile (88) aménagé pour introduire de l'huile dans la troisième portion d'embrayage hydraulique (C2); où
l'élément de soupape (194, 230, 234, 238) peut pivoter entre le premier trajet d'huile (136), le deuxième trajet d'huile (138), le troisième trajet d'huile (184) et le septième trajet d'huile (88); peut être réglé en une troisième position de pivotement; et comporte par ailleurs un huitième trajet d'huile (214) s'étendant à partir du quatrième trajet d'huile (206, 232) dans une direction verticale par rapport à l'axe de pivotement (194a, 230a) et s'ouvrant dans ladite direction verticale;
le huitième trajet d'huile (214) se trouve dans un deuxième plan hypothétique (224) perpendiculaire à l'axe de pivotement (194a, 230a);
le deuxième plan hypothétique (224) se trouve à une distance du premier plan hypothétique (222) dans une direction parallèle à l'axe de pivotement (194a, 230a); et
le septième trajet d'huile (88) et le huitième trajet d'huile (214) communiquent l'un avec l'autre lorsque l'élément de soupape (194, 230, 234, 238) se trouve dans la troisième position de pivotement.

4. Véhicule du type à enfourcher (10) comprenant l'appareil de transmission (44) selon l'une des revendications 1 à 3.
